# EUROPÄISCHE PATENTSCHRIFT

(11) **EP 3 581 079 B1**
(45) Veröffentlichungstag und Bekanntmachung des Hinweises auf die Patenterteilung: **25.11.2020**
(21) Anmeldenummer: 19178804.1
(22) Anmeldetag: 06.06.2019
(51) Int. Cl.: A47J 42/38, A47J 42/06, A47J 42/16, F16C 33/78, F16C 35/063, F16C 35/067, F16C 19/06

(54) **MAHLVORRICHTUNG ZUM MAHLEN VON KAFFEEBOHNEN**
GRINDING DEVICE FOR GRINDING COFFEE BEANS
DISPOSITIF DE BROYAGE DESTINÉ AU BROYAGE DE GRAINS DE CAFÉ

(30) Priorität: 14.06.2018 EP 18177786
(43) Veröffentlichungstag der Anmeldung: 18.12.2019
(73) Patentinhaber: JURA Elektroapparate AG, 4626 Niederbuchsiten (CH)
(72) Erfinder: ULLMANN, Erich, 4622 Egerkingen (CH); GÜLLER, Jodok, 6210 Sursee (CH)
(74) Vertreter: EGLI-EUROPEAN PATENT ATTORNEYS

(56) Entgegenhaltungen:
- EP-A1- 2 764 808
- EP-A1- 2 984 973
- DE-A1-102010 017 721
- DE-T5-112016 003 092

## Beschreibung

### Technisches Gebiet

Die Erfindung bezieht sich auf eine Mahlvorrichtung zum Mahlen von Kaffeebohnen.

### Stand der Technik

Eine Mahlvorrichtung der genannten Art ist üblicherweise in Kombination mit einer automatischen Kaffeemaschine vorgesehen, kann jedoch auch allein verwendbar sein.

Eine Mahlvorrichtung zum Mahlen von Kaffeebohnen gemäss dem bekannten Stand der Technik umfasst gewöhnlich:
- ein erstes Mahlelement und ein zweites Mahlelement, wobei das erste Mahlelement relativ zum zweiten Mahlelement um eine Drehachse derart drehbar ist, dass Kaffeebohnen zwischen dem ersten Mahlelement und dem zweiten Mahlelement zu einem Kaffeepulver zerkleinerbar sind;
- ein Mitnehmerrad, welches gemeinsam mit dem ersten Mahlelement um die Drehachse drehbar ist und derart angeordnet ist, dass bei einer Drehung des Mitnehmerrads um die Drehachse das Kaffeepulver auf einem Randbereich des Mitnehmerrads durch einen für das Kaffeepulver vorbestimmten Raumbereich zu einem Austrittskanal zur Ausgabe des Kaffeepulvers aus der Mahlvorrichtung beförderbar ist;
- ein Gehäuse, welches das erste Mahlelement, das zweite Mahlelement, das Mitnehmerrad und den für das Kaffeepulver vorbestimmten Raumbereich umgibt und den Austrittskanal umfasst, wobei das zweite Mahlelement ortsfest relativ zum Gehäuse angeordnet ist;
- eine Drehlagerung zur Lagerung des ersten Mahlelements und/oder des Mitnehmerrads, sodass das erste Mahlelement und das Mitnehmerrad um die Drehachse relativ zum Gehäuse drehbar sind;
- ein Dichtelement, welches ausgebildet ist, ein Vordringen von Kaffeepulver aus dem für das Kaffeepulver vorbestimmten Raumbereich in einen Raumbereich unterhalb des Mitnehmerrads zu verhindern.

Es gibt verschiedene Typen von Mahlvorrichtungen, welche sich hinsichtlich der Form und Anordnung der Mahlelemente unterscheiden, z.B. Kegelmahlwerke oder Scheibenmahlwerke.

Damit Kaffeebohnen zwischen dem ersten Mahlelement und dem zweiten Mahlelement zu einem Kaffeepulver zerkleinert werden können, ist es notwendig, dass zwischen dem ersten Mahlelement und dem zweiten Mahlelement ein Spalt ausgebildet ist, in welchen die Kaffeebohnen zum Zwecke des Zerkleinerns eingeführt werden müssen. Dieser Spalt wird im Folgenden auch als "Mahlspalt" bezeichnet. Ein derartiger Mahlspalt weist in der Regel einen Bereich auf, durch welchen ganze Kaffeebohnen in den Mahlspalt eingeführt werden können. Dieser Bereich des Mahlspalts wird im Folgenden auch als "Eintrittspalt" für (die zu mahlenden) Kaffeebohnen bezeichnet. Ein derartiger Mahlspalt weist in der Regel ausserdem einen Bereich auf, durch welchen das beim Mahlen produzierte Kaffeepulver den Mahlspalt in den für das Kaffeepulver vorgebestimmten Raumbereich verlassen kann, um eine Beförderung des Kaffeepulvers mithilfe des Mitnehmerrads zum Austrittskanal zu ermöglichen. Dieser Bereich des Mahlspalts wird im Folgenden auch als "Austrittsspalt" für das (beim Mahlen produzierte) Kaffeepulver bezeichnet.

Um das erste Mahlelement und das Mitnehmerrad um die Drehachse drehen zu können, kann eine Mahlvorrichtung der vorstehend genannten Art mit einer einen Antriebsmotor umfassenden Antriebseinrichtung versehen sein, welche in der Regel an einer Unterseite des Gehäuses, welches das erste Mahlelement, das zweite Mahlelement und das Mitnehmerrad umgibt, befestigt ist und derart unterhalb des Mitnehmerrads angeordnet ist, dass eine Antriebswelle des Antriebsmotors an das Mitnehmerrad und das erste Mahlelement gekoppelt sein kann, um eine Drehbewegung der Antriebswelle auf das Mitnehmerrad und das erste Mahlelement übertragen zu können.

In EP 2 764 808 A1 oder EP 2 984 973 A1 ist eine Mahlvorrichtung der vorstehend genannten Art offenbart, bei welcher die Antriebseinrichtung einen Antriebsmotor und ein Getriebe umfasst, wobei das Getriebe zwischen dem Antriebsmotor und dem Mitnehmerrad angeordnet ist, sodass ein Antrieb des Getriebes mittels der Antriebswelle des Antriebsmotors antreibbar ist und ein Abtrieb des Getriebes an das Mitnehmerrad und/oder das erste Mahlelement gekoppelt ist, um eine Drehbewegung der Antriebswelle des Antriebsmotors auf das Mitnehmerrad und das erste Mahlelement übertragen zu können.

Hinsichtlich einer Mahlvorrichtung der vorstehend genannten Art ist eine Drehlagerung zur Lagerung des ersten Mahlelements und/oder des Mitnehmerrads bekannt, welche als Gleitlagerung zur Führung einer gemeinsamen Drehachse des ersten Mahlelements und des Mitnehmerrads relativ zu dem Gehäuse, welches das erste Mahlelement, das zweite Mahlelement und das Mitnehmerrad umgibt, realisiert ist.

Im Falle der in EP 2 764 808 A1 bzw. EP 2 984 973 A1 offenbarten Mahlvorrichtung ist eine Drehlagerung für das erste Mahlelement und das Mitnehmerrad dadurch realisiert, dass der Abtrieb des Getriebes, welcher an das erste Mahlelement und das Mitnehmerrad gekoppelt ist, mittels eines Kugellagers geführt ist, wobei dieses Kugellager in einem Gehäuse des Getriebes angeordnet ist und das erste Mahlelement und das Mitnehmerrad an dem Abtrieb des Getriebes befestigt sind. Das Gehäuse des Getriebes umschliesst im Wesentlichen alle beweglichen Teile des Getriebes, sodass in diesem Fall das Kugellager ausserhalb des Gehäuses der Mahlvorrichtung, welches das erste Mahlelement, das zweite Mahlelement und das Mitnehmerrad umgibt, angeordnet ist und somit hauptsächlich für eine relativ präzise Führung des Abtriebs des Getriebes mit Bezug auf das Gehäuse des Getriebes sorgt.

Das Dichtelement der Mahlvorrichtung der vorstehend genannten Art hat den Zweck, eine Trennung zwischen dem für das Kaffeepulver vorbestimmten, vom dem Gehäuse der Mahlvorrichtung umgebenen Raumbereich und einem sich unterhalb des Mitnehmerrads erstreckenden Raumbereich zu ermöglichen. Dies soll einerseits verhindern, dass während eines Betriebs der Mahlvorrichtung produziertes Kaffeepulver aus dem für das Kaffeepulver vorbestimmten Raumbereich in einen Raumbereich unterhalb des Mitnehmerrads gelangen kann, welcher für die Drehlagerung zur Lagerung des ersten Mahlelement und/oder des Mitnehmerrads und/oder für eine Antriebseinrichtung vorgesehen sein kann. Auf diese Weise soll insbesondere eine Verschmutzung der Drehlagerung und/oder des Antriebsmotors und/oder eine Verschmutzung eines (gegebenenfalls vorhandenen) Getriebes mit Kaffeepulver vermieden werden. Weiterhin soll vermieden werden, dass unerwünschte Substanzen aus einem Raumbereich unterhalb des Mitnehmerrads in den für das Kaffeepulver vorbestimmten Raumbereich innerhalb des Gehäuses der Mahlvorrichtung vordringen können und beispielsweise die hygienischen Verhältnisse in der Mahlvorrichtung und/oder die Qualität des produzierten Kaffeepulvers beeinträchtigen könnten.

Hinsichtlich einer bekannten Mahlvorrichtung der vorstehend genannten Art ist es beispielsweise üblich, das Dichtelement als Labyrinth-Dichtung auszubilden, basierend auf einem Labyrinth, welches zwischen zwei Teilen der Mahlvorrichtung ausgebildet sein kann, welche relativ zueinander bewegt werden, falls das Mitnehmerrad um die Drehachse bewegt wird. Als Alternative ist ausserdem bekannt (z.B. gemäss EP 2 764 808 A1 bzw. EP 2 984 973 A1), dass das Dichtelement ein (typischerweise aus Filz gefertigter) Dichtring sein kann, welcher formschlüssig in einen Spalt einsetzbar ist, der sich ringförmig um die Drehachse des Mitnehmerrads erstreckt und zwischen dem Mitnehmerrad und einer Wand des Gehäuses ausgebildet ist, welches das erste Mahlelement, das zweite Mahlelement und das Mitnehmerrad umschliesst.

Bekannte Mahlvorrichtungen der vorstehend genannten Art haben jedoch eine Reihe von Nachteile, welche im Betrieb derartiger Mahlvorrichtungen Anlass zu Problemen geben.

Bekannte Dichtelemente, welche als Labyrinth-Dichtung ausgebildet sind, sind in der Regel nicht absolut dicht und können deshalb nicht mit absoluter Sicherheit den für das Kaffeepulver vorbestimmten Raumbereich von dem Raumbereich unterhalb des Mitnehmerrads separieren. Somit kann im Betrieb der Mahlvorrichtungen nicht zuverlässig verhindert werden, dass Kaffeepulver die Antriebseinrichtung verschmutzt. Ein Teil des produzierten Kaffeepulvers kann auf diese Weise in das Gehäuse eines unterhalb des Mitnehmerrads angeordneten Getriebes gelangen und sich beispielsweise an einem in dem Gehäuse des Getriebes angeordneten Kugellager ablagern, mit dem Ergebnis, dass das Kugellager blockieren kann. Andererseits kann das Getriebe unerwünschte Stoffe (z.B. Schmierstoffe) abgeben, welche von einem als Labyrinth-Dichtung ausgebildeten Dichtelement nicht zuverlässig daran gehindert werden, bis in den für das Kaffeepulver vorbestimmten Raumbereich im Gehäuse der Mahlvorrichtung vorzudringen.

Weiterhin zeigen bekannte Mahlvorrichtungen der vorstehend genannten Art den Effekt, dass das erste Mahlelement beim Mahlen von Kaffeebohnen aufgrund der beim Mahlen auftretenden mechanischen Wechselwirkungen mit den Kaffeebohnen und dem zweiten Mahlelement mit relativ grossen Kräften belastet wird, welche geeignet sind, das erste Mahlelement relativ zum zweiten Mahlelement bzw. relativ zum Gehäuse der Mahlvorrichtung zu verschieben, und zwar derart, dass das erste Mahlelement radial und/oder axial bezüglich der Drehachse bewegt wird. Dabei verändert sich die räumliche Lage der Drehachse, um welche das erste Mahlelement gedreht wird, relativ zum ersten Mahlelement bzw. zum Gehäuse der Mahlvorrichtung als Funktion der Zeit, sodass der zwischen dem ersten Mahlelement und dem zweiten Mahlelement ausgebildete Mahlspalt hinsichtlich seiner räumlichen Abmessungen und/oder seiner geometrischen Form Fluktuationen zeigt, welche sich als Funktion der Zeit verändern können. Auf diese Weise können sich insbesondere eine Breite des Mahlspalts (entsprechend einem Abstand zwischen dem ersten Mahlelement und dem zweiten Mahlelement) und/oder die geometrische Form des Mahlspalts beim Mahlen als Funktion der Zeit ändern. Ein derartig veränderlicher Mahlspalt hat gewöhnlich Nachteile hinsichtlich der Qualität des produzierten Kaffeepulvers.

Ein weiterer Nachteil betrifft das vorstehend genannte Dichtelement, welches als (typischerweise aus Filz gefertigter) Dichtring ausgebildet ist und welcher formschlüssig in einen Spalt einsetzbar ist, der sich ringförmig um die Drehachse des Mitnehmerrads erstreckt und zwischen dem Mitnehmerrad und einer Wand des Gehäuses ausgebildet ist, welches das erste Mahlelement, das zweite Mahlelement und das Mitnehmerrad umschliesst. Ein derartiger Dichtring zeigt im Betrieb der Mahlvorrichtung - bedingt durch eine mechanische Wechselwirkung des Dichtrings mit dem Mitnehmerrad und/oder der Wand des Gehäuses - erhebliche Verschleisserscheinungen, mit dem Ergebnis, dass der Dichtring mit der Zeit nicht mehr in der Lage ist, den Spalt zwischen dem Mitnehmerrad und der Wand des Gehäuses der Mahlvorrichtung zuverlässig dicht zu halten.

Die Druckschrift DE 10 2010 017721 A1 offenbart eine Mahlvorrichtung zum Mahlen von Kaffeebohnen, welche umfasst: ein erstes Mahlelement in Form einer ersten ringförmigen Mahlscheibe und ein zweites Mahlelement in Form einer zweiten ringförmigen Mahlscheibe, wobei das erste Mahlelement relativ zum zweiten Mahlelement um eine Drehachse derart drehbar ist, dass Kaffeebohnen zwischen dem ersten Mahlelement und dem zweiten Mahlelement zu einem Kaffeepulver zerkleinerbar sind; ein drehbar gelagertes Mitnehmerrad, an welchem das erste Mahlelement befestigt ist und welches gemeinsam mit dem ersten Mahlelement um die Drehachse drehbar ist und derart angeordnet ist, dass bei einer Drehung des Mitnehmerrads um die Drehachse das Kaffeepulver auf einem Randbereich des Mitnehmerrads durch einen für das Kaffeepulver vorbestimmten Raumbereich zu einer Ausgabeöffnung zur Ausgabe des Kaffeepulvers aus der Mahlvorrichtung beförderbar ist; ein Gehäuse, welches das erste Mahlelement, das zweite Mahlelement, das Mitnehmerrad und den für das Kaffeepulver vorbestimmten Raumbereich umgibt und die Ausgabeöffnung zur Ausgabe des Kaffeepulvers umfasst, wobei das zweite Mahlelement ortsfest relativ zum Gehäuse angeordnet ist. Als Drehlagerung zur Lagerung des ersten Mahlelements und/oder des Mitnehmerrads dient in diesem Fall ein Wälzlager, welches als "Schräglager", insbesondere als "Schrägkugellager" ausgebildet ist, so dass es sowohl axiale als auch radiale Kräfte aufnehmen kann. Das Wälzlager weist einen sich um die Drehachse erstreckenden Innenring, einen sich um die Drehachse erstreckenden Aussenring und mehrere zwischen dem Innenring und dem Aussenring angeordnete Wälzkörper auf, wobei der Aussenring ortsfest an einer Bodenwand des Gehäuses in einem Abstand zum Mitnehmerrad angeordnet ist, sodass zwischen dem Mitnehmerrad und dem Aussenring des Wälzlagers ein sich ringförmig um die Drehachse erstreckender Zwischenraum ausgebildet ist, welcher sich oberhalb des Aussenrings axial zur Drehachse zwischen einer unteren Begrenzungsfläche und einer oberen Begrenzungsfläche erstreckt, wobei die untere Begrenzungsfläche des Zwischenraums ortsfest bezüglich des Aussenrings und die obere Begrenzungsfläche des Zwischenraums ortsfest bezüglich des Mitnehmerrad ausgebildet ist und wobei das erste Mahlelement und das Mitnehmerrad ortsfest relativ zum Innenring des Wälzlagers angeordnet sind und der Innenring mittels der Wälzkörper am Aussenring gestützt ist, sodass das erste Mahlelement, das Mitnehmerrad und der Innenring gemeinsam um die Drehachse drehbar sind. Das Mitnehmerrad erstreckt sich radial zur Drehachse im Vergleich zum Aussenring des Wälzlagers derart, dass das Mitnehmerrad senkrecht zur Drehachse einen Durchmesser aufweist, welcher grösser ist als ein entsprechender Durchmesser des Aussenrings des Wälzlagers. Um das Gehäuse gegen einen Austritt von Kaffeepulver abzudichten, ist ein Dichtring, vorzugsweise ein Filzring, vorgesehen. Dieser Dichtring ist in einer Ringnut angeordnet, welche sich ringförmig um die Drehachse erstreckt und in der Bodenwand des Gehäuses ausgebildet ist, und zwar radial ausserhalb des Wälzlagers in einem radialen Abstand zum Aussenring des Wälzlagers. Die Ringnut erstreckt sich derart um die Drehachse, dass der Dichtring, wenn er in die Ringnut eingesetzt ist, an der Unterseite des Mitnehmerrads in der Nähe eines äusseren Randes des Mitnehmerrads anliegt. Der Dichtring ist demnach in einem Spalt zwischen dem Mitnehmerrad und der Bodenwand des Gehäuses angeordnet, welcher sich unterhalb des Mitnehmerrads in der Nähe des äusseren Randes des Mitnehmerrads und insbesondere radial ausserhalb des Wälzlagers in einem radialen Abstand zum Aussenring des Wälzlagers erstreckt. Auch dieser Dichtring zeigt im Betrieb der Mahlvorrichtung - bedingt durch eine mechanische Wechselwirkung des Dichtrings mit dem Mitnehmerrad und/oder der Wand des Gehäuses - erhebliche Verschleisserscheinungen, mit dem Ergebnis, dass der Dichtring mit der Zeit nicht mehr in der Lage ist, den Spalt zwischen dem Mitnehmerrad und der Wand des Gehäuses der Mahlvorrichtung zuverlässig dicht zu halten.

Die Druckschrift DE 11 2016 003092 T5 offenbart eine Mahlvorrichtung zum Mahlen von Kaffeebohnen, welches umfasst: ein um eine Drehachse drehbares erstes Mahlelement mit der Form eines Kegels, ein zweites Mahlelement in der Form eines sich um die Drehachse erstreckenden, das erste Mahlelement umgebenden Ringes, ein drehbar gelagertes Mitnehmerrad, an welchem das erste Mahlelement befestigt ist und welches gemeinsam mit dem ersten Mahlelement um die Drehachse drehbar ist und mit welchem bei einer Drehung des Mitnehmerrads um die Drehachse gemahlenes Kaffeepulver auf einem Randbereich des Mitnehmerrads zu einer Ausgabeöffnung zur Ausgabe des Kaffeepulvers aus der Mahlvorrichtung beförderbar ist; ein Gehäuse, welches das erste Mahlelement, das zweite Mahlelement und das Mitnehmerrad umgibt und die Ausgabeöffnung zur Ausgabe des Kaffeepulvers umfasst, wobei das zweite Mahlelement ortsfest relativ zum Gehäuse angeordnet ist. Als Drehlagerung zur Lagerung des ersten Mahlelements und/oder des Mitnehmerrads dient (ähnlich wie bei der aus der Druckschrift DE 10 2010 017721 A1 bekannten Mahlvorrichtung) ein Wälzlager, welches einen sich um die Drehachse erstreckenden Innenring, einen sich um die Drehachse erstreckenden Aussenring und mehrere zwischen dem Innenring und dem Aussenring angeordnete Wälzkörper aufweist, wobei der Aussenring ortsfest an einer Bodenwand des Gehäuses in einem Abstand zum Mitnehmerrad angeordnet ist. Das Mitnehmerrad erstreckt sich radial zur Drehachse im Vergleich zum Aussenring des Wälzlagers derart, dass das Mitnehmerrad senkrecht zur Drehachse einen Durchmesser aufweist, welcher wesentlich grösser ist als ein entsprechender Durchmesser des Aussenrings des Wälzlagers. Um das Gehäuse gegen einen Austritt von Kaffeepulver abzudichten, ist ein Dichtring, vorzugsweise ein Wollring, vorgesehen. Dieser Dichtring ist in einer Ringnut angeordnet, welche sich ringförmig um die Drehachse erstreckt und in der Bodenwand des Gehäuses ausgebildet ist, und zwar radial ausserhalb des Wälzlagers in einem radialen Abstand zum Aussenring des Wälzlagers. Der Dichtring ist demnach in einem Spalt zwischen dem Mitnehmerrad und der Bodenwand des Gehäuses angeordnet, welcher sich unterhalb des Mitnehmerrads in der Nähe des äusseren Randes des Mitnehmerrads und insbesondere radial ausserhalb des Wälzlagers in einem radialen Abstand zum Aussenring des Wälzlagers erstreckt. Auch dieser Dichtring zeigt im Betrieb der Mahlvorrichtung (ähnlich wie ein aus der Druckschrift DE 10 2010 017721 A1 bekannter Dichtring) erhebliche Verschleisserscheinungen, mit dem Ergebnis, dass der Dichtring mit der Zeit nicht mehr in der Lage ist, den Spalt zwischen dem Mitnehmerrad und der Wand des Gehäuses der Mahlvorrichtung zuverlässig dicht zu halten.

### Zusammenfassung der Erfindung

Der vorliegenden Erfindung liegt die Aufgabe zugrunde, die genannten Nachteile zu vermeiden, und eine Mahlvorrichtung zum Mahlen von Kaffeebohnen zu schaffen, welche ein Vordringen von Kaffeepulver in einen Raumbereich unterhalb des Mitnehmerrads zuverlässiger verhindern kann.

Diese Aufgabe wird durch eine Mahlvorrichtung mit den Merkmalen des Patentanspruchs 1 gelöst.

Diese Mahlvorrichtung umfasst: ein erstes Mahlelement und ein zweites Mahlelement, wobei das erste Mahlelement relativ zum zweiten Mahlelement um eine Drehachse derart drehbar ist, dass Kaffeebohnen zwischen dem ersten Mahlelement und dem zweiten Mahlelement zu einem Kaffeepulver zerkleinerbar sind; ein Mitnehmerrad, welches gemeinsam mit dem ersten Mahlelement um die Drehachse drehbar ist und derart angeordnet ist, dass bei einer Drehung des Mitnehmerrads um die Drehachse das Kaffeepulver auf einem Randbereich des Mitnehmerrads durch einen für das Kaffeepulver vorbestimmten Raumbereich zu einem Austrittskanal zur Ausgabe des Kaffeepulvers aus der Mahlvorrichtung beförderbar ist; ein Gehäuse, welches das erste Mahlelement, das zweite Mahlelement, das Mitnehmerrad und den für das Kaffeepulver vorbestimmten Raumbereich umgibt und den Austrittskanal umfasst, wobei das zweite Mahlelement ortsfest relativ zum Gehäuse angeordnet ist; eine Drehlagerung zur Lagerung des ersten Mahlelements und/oder des Mitnehmerrads, sodass das erste Mahlelement und das Mitnehmerrad um die Drehachse relativ zum Gehäuse drehbar sind, wobei die Drehlagerung ein Wälzlager umfasst, welches einen sich um die Drehachse erstreckenden Innenring, einen sich um die Drehachse erstreckenden Aussenring und mehrere zwischen dem Innenring und dem Aussenring angeordnete Wälzkörper aufweist, wobei der Aussenring ortsfest am Gehäuse in einem Abstand zum Mitnehmerrad angeordnet ist, sodass zwischen dem Mitnehmerrad und dem Aussenring des Wälzlagers ein sich ringförmig um die Drehachse erstreckender Zwischenraum ausgebildet ist, welcher sich oberhalb des Aussenrings axial zur Drehachse zwischen einer unteren Begrenzungsfläche und einer oberen Begrenzungsfläche erstreckt, wobei die untere Begrenzungsfläche des Zwischenraums ortsfest bezüglich des Aussenrings und die obere Begrenzungsfläche des Zwischenraums ortsfest bezüglich des Mitnehmerrad ausgebildet ist und wobei das erste Mahlelement und das Mitnehmerrad ortsfest relativ zum Innenring des Wälzlagers angeordnet sind und der Innenring mittels der Wälzkörper am Aussenring gestützt ist, sodass das erste Mahlelement, das Mitnehmerrad und der Innenring gemeinsam um die Drehachse drehbar sind; ein Dichtelement, welches sich ringförmig um die Drehachse erstreckt und ausgebildet ist, ein Vordringen von Kaffeepulver aus dem für das Kaffeepulver vorbestimmten Raumbereich in einen Raumbereich unterhalb des Mitnehmerrads zu verhindern.

Gemäss der Erfindung ist das Dichtelement als ein Axial-Dichtring ausgebildet, welcher sich durch den sich ringförmig um die Drehachse erstreckenden Zwischenraum derart erstreckt, dass der Axial-Dichtring sowohl an der unteren Begrenzungsfläche des Zwischenraums als auch an der oberen Begrenzungsfläche des Zwischenraums anliegt.

Dadurch, dass die Drehlagerung ein Wälzlager umfasst, dessen Aussenring ortsfest an dem (das erste Mahlelement, das zweite Mahlelement und das Mitnehmerrad umgebenden) Gehäuse der Mahlvorrichtung angeordnet ist, und dadurch, dass das erste Mahlelement und das Mitnehmerrad ortsfest relativ zum Innenring des Wälzlagers angeordnet sind und der Innenring mittels der Wälzkörper am Aussenring gestützt ist, wird erreicht, dass das Wälzlager eine präzise Führung des ersten Mahlelements und des Mitnehmerrads mit Bezug auf das Gehäuse der Mahlvorrichtung ermöglicht. Diese Führung bewirkt eine Stabilisierung der räumlichen Lage der Drehachse, um welche das erste Mahlelement beim Mahlen von Kaffeebohnen gedreht wird, mit Bezug auf das Gehäuse der Mahlvorrichtung und somit auch relativ zum zweiten Mahlelement. Aufgrund dieser Stabilisierung der räumlichen Lage der Drehachse mit Bezug auf das Gehäuse der Mahlvorrichtung werden zwangsläufig Fluktuationen des Mahlspalts hinsichtlich seiner räumlichen Abmessungen und/oder seiner geometrischen Form reduziert oder vermieden.

Dadurch, dass das Dichtelement als ein Axial-Dichtring ausgebildet ist und ausserdem in einem sich ringförmig um die Drehachse erstreckenden Zwischenraum angeordnet ist, welcher sich oberhalb des Aussenrings axial zur Drehachse zwischen einer unteren Begrenzungsfläche und einer oberen Begrenzungsfläche erstreckt, wird erreicht, dass das Dichtelement bzw. der Axial-Dichtring mit zwei Begrenzungsflächen (d.h. der unteren Begrenzungsfläche und einer oberen Begrenzungsfläche des Zwischenraums) in Kontakt ist, welche unmittelbar über dem Aussenring (insbesondere in einer axial zur Drehachse gerichteten Projektion des Aussenrings auf das Mitnehmerrad) angeordnet sind. Dadurch, dass die untere Begrenzungsfläche und die obere Begrenzungsfläche unmittelbar über dem Aussenring des Wälzlagers angeordnet sind, ist gewährleistet, dass die obere Begrenzungsfläche bei einer Rotation des Mitnehmerrads um die Drehachse bezüglich der unteren Begrenzungsfläche mit einer besonders grossen Präzision geführt ist, sodass die Erstreckung des Zwischenraums zwischen der unteren Begrenzungsfläche und der oberen Begrenzungsfläche axial zur Drehachse bei einer Rotation des Mitnehmerrads um die Drehachse allenfalls innerhalb von Toleranzen fluktuieren kann, welche im Vergleich zum Stand der Technik (u.a. im Vergleich zum Stand der Technik gemäss DE 11 2016 003092 T5 und DE 10 2010 017721 A1) besonders gering sind. Es ist deshalb möglich, ein Dichtelement in Form eines Axial-Dichtrings derart in dem Zwischenraum über dem Aussenring des Wälzlagers zwischen der unteren Begrenzungsfläche und der oberen Begrenzungsfläche zu platzieren, dass das Dichtelement bei einer Rotation des Mitnehmerrads um die Drehachse einer besonders geringen mechanischen Belastung ausgesetzt ist, was einen geringen Verschleiss und somit eine lange Lebensdauer des Dichtelements gewährleistet.

Durch die Anordnung des vorstehend genannten (Axial-) Dichtrings wird ausserdem erreicht, dass das beim Mahlen produzierte Kaffeepulver den zwischen dem Mitnehmerrad und dem Aussenring des Wälzlagers ausgebildeten Zwischenraum nicht in Richtung auf die Drehachse passieren kann. Auf diese Weise wird verhindert, dass Kaffeepulver durch den zwischen dem Mitnehmerrad und dem Aussenring des Wälzlagers ausgebildeten Zwischenraum in einen Raumbereich unterhalb des Mitnehmerrads gelangen kann, welcher radial nach aussen durch den Dichtring begrenzt ist. Auf diese Weise wird mithilfe des Dichtrings insbesondere verhindert, dass Kaffeepulver durch den zwischen dem Mitnehmerrad und dem Aussenring des Wälzlagers ausgebildeten Zwischenraum zu den Wälzkörpern und/oder den Innenring des Wälzlagers vordringen kann. Ebenso ermöglicht es der Dichtring, dass in einem Raumbereich unterhalb des Mitnehmerrads eine Antriebseinrichtung zum Erzeugen einer Drehbewegung des Innenrings des Wälzlagers, des ersten Mahlelements und/oder des Mitnehmerrads angeordnet werden kann und dabei gewährleistet ist, dass kein Kaffeepulver durch den zwischen dem Mitnehmerrad und dem Aussenring des Wälzlagers ausgebildeten Zwischenraum zur Antriebseinrichtung vordringen könnte. Die Antriebseinrichtung ist auf diese Weise vor Verschmutzungen geschützt. Ausserdem verhindert der Dichtring, dass bestimmte unerwünschte Substanzen (z.B. Schmiermittel), welche gegebenenfalls vom Wälzlager und/oder von der Antriebseinrichtung abgegeben werden können, durch den zwischen dem Mitnehmerrad und dem Aussenring des Wälzlagers ausgebildeten Zwischenraum zu dem für das Kaffeepulver vorbestimmten Raumbereich im Gehäuse der Mahlvorrichtung vordringen und dabei das Kaffeepulver kontaminieren können.

Das Wälzlager bewirkt ausserdem, dass auch das Mitnehmerrad beim Mahlen bei einer Rotation um die Drehachse mithilfe des Wälzlagers präzise mit Bezug auf das Gehäuse der Mahlvorrichtung und mit Bezug auf den Aussenring des Wälzlagers geführt ist. Dies hat zur Folge, dass die Drehachse, um welche das Mitnehmerrad beim Mahlen rotiert, mit Bezug auf das Gehäuse der Mahlvorrichtung und mit Bezug auf den Aussenring des Wälzlagers relativ stabil gehalten ist und sich folglich der zwischen dem Mitnehmerrad und dem Aussenring des Wälzlagers ausgebildete Zwischenraum beim Mahlen hinsichtlich seiner räumlichen Abmessungen und/oder seiner geometrischen Form nicht oder allenfalls geringfügig als Funktion der Zeit verändern kann. Auf diese Weise ist es möglich, die geometrische Form des Dichtrings derart zu wählen, dass der Dichtring geeignet an die Form des zwischen dem Mitnehmerrad und dem Aussenring des Wälzlagers ausgebildeten Zwischenraums angepasst ist, um mechanische Belastungen des Dichtrings beim Mahlen auf ein Minimum zu reduzieren. Dadurch, dass die Drehachse, um welche das Mitnehmerrad beim Mahlen rotiert, mit Bezug auf das Gehäuse der Mahlvorrichtung und mit Bezug auf den Aussenring des Wälzlagers relativ stabil gehalten ist, wird insbesondere erreicht, dass stossartige mechanische Belastungen des Dichtrings während des Mahlens vermieden werden können. Das Wälzlager trägt dementsprechend dazu bei, dass ein Verschleiss des Dichtrings weitgehend vermieden werden kann, was (im Vergleich zum Stand der Technik) eine verhältnismässig lange Lebensdauer des Dichtrings ermöglicht.

Bei einer Ausführungsform der Mahlvorrichtung ist das Wälzlager als Radial-Lager ausgebildet, welches zumindest radial bezüglich der Drehachse belastbar ist. Bei dieser Ausführung des Wälzlagers ist vorteilhafterweise zumindest gewährleistet, dass beim Mahlen unerwünschte Veränderungen der räumlichen Lage des ersten Mahlelements radial zur Drehachse vermieden werden, so dass zumindest räumliche Fluktuationen des Mahlspalts radial zur Drehachse während des Mahlens nicht möglich sind.

Alternativ kann das Wälzlager auch als kombiniertes Axial-/Radial-Lager ausgebildet sein, welches sowohl radial als auch axial bezüglich der Drehachse belastbar ist. Bei dieser Ausführung des Wälzlagers ist vorteilhafterweise gewährleistet, dass beim Mahlen unerwünschte Veränderungen der räumlichen Lage des ersten Mahlelements sowohl radial als auch axial bezüglich der Drehachse vermieden werden. Dies ermöglicht eine besonders stabile Führung des ersten Mahlelements, sodass räumliche Fluktuationen des Mahlspalts radial und axial zur Drehachse während des Mahlens vermieden werden. Diese Ausbildung des Wälzlagers ermöglicht folglich eine besonders starke Unterdrückung von Fluktuationen des Mahlspalts während des Mahlens. Ausführungsformen von Wälzlagern, welche als kombiniertes Axial-/Radial-Lager ausgebildet sind und dementsprechend sowohl radial als auch axial bezüglich der Drehachse belastbar sind, gehören bereits zum Stand der Technik, z.B. Rillenkugellager, Zylinderrollenlager, Kegelrollenlager, Pendelrollenlager, Tonnenrollenlager oder Nadellager. Diese Ausführungsformen von Wälzlagern sind zur Realisierung der vorstehend genannten Ausführungsform der Mahlvorrichtung verwendbar.

Der Dichtring der Mahlvorrichtung kann gemäss einer Reihe von Varianten ausgebildet sein, insbesondere hinsichtlich seiner Form und seiner Anordnung relativ zum Mitnehmerrad, zum Aussenring des Wälzlagers und zum Innenring des Wälzlagers.

Bei einer Ausführungsform der Mahlvorrichtung ist der Dichtring beispielsweise derart geformt und angeordnet, dass der Dichtring zumindest mit dem Mitnehmerrad und dem Aussenring des Wälzlagers in Kontakt ist. Diese Ausführungsform ist besonders einfach und kostengünstig realisierbar. In diesem Fall können die untere Begrenzungsfläche des Zwischenraums am Aussenring des Wälzlagers und die obere Begrenzungsfläche des Zwischenraums am Mitnehmerrad ausgebildet sein.

Bei einer anderen Ausführungsform der Mahlvorrichtung ist der Dichtring derart geformt und angeordnet, dass der Dichtring auf einer vom Mitnehmerrad abgewandten Seite mit dem Aussenring des Wälzlagers zumindest entlang eines sich ringförmig um die Drehachse erstreckenden Oberflächenbereichs des Aussenrings in Kontakt ist. Der Aussenring des Wälzlagers kann in der Regel derart geformt und angeordnet sein, dass er auf einer dem Mitnehmerrad zugewandten Seite eine Oberfläche bzw. einen Oberflächenbereich aufweist, welche bzw. welcher sich ringförmig um die Drehachse erstreckt und ausserdem eben ausgebildet ist und senkrecht zur Drehachse ausgerichtet sein kann. Eine derartige ebene Oberfläche bzw. ein derartiger ebener Oberflächenbereich des Aussenrings ist vorteilhafterweise als Auflagefläche für einen Dichtring geeignet. Insbesondere kann der Dichtring in diesem Fall eine "einfache" geometrische Form aufweisen: der Dichtring kann beispielsweise auf einer Seite, welche dazu bestimmt ist, mit dem Aussenring des Wälzlagers in Kontakt gebracht zu werden, ebenfalls einen ebenen Oberflächenbereich aufweisen. Weiterhin kann der Dichtring in diesem Fall derart in der Mahlvorrichtung implementiert sein, dass er ortsfest am Mitnehmerrad befestigt ist und bei einer Rotation des Mitnehmerrads um die Drehachse während des Mahlens auf einer ebenen Oberfläche bzw. auf einem ebenen Oberflächenbereich des Aussenrings gleiten kann. Hierbei ist einerseits gewährleistet, dass der Dichtring beim Gleiten auf der Oberfläche bzw. auf dem Oberflächenbereich des Aussenrings den zwischen dem Mitnehmerrad und dem Aussenring ausgebildeten Zwischenraum dicht verschliessen kann; weiterhin ist hierbei realisierbar, dass dieses Gleiten des Dichtrings auf der Oberfläche bzw. auf dem Oberflächenbereich des Aussenrings mit geringer Reibung erfolgen kann (insbesondere durch eine geeignete Wahl der jeweiligen WerkStoffe, aus welchen der Dichtring bzw. der Aussenring gefertigt sind).

Bei einer weiteren Ausführungsform der Mahlvorrichtung ist der Dichtring derart geformt und angeordnet, dass der Dichtring sich radial zur Drehachse derart erstreckt, dass der Dichtring einen sich ringförmig um die Drehachse ersteckenden Abschnitt aufweist, welcher mit dem Innenring des Wälzlagers in Kontakt ist. Hierbei ist es insbesondere möglich, dass der Dichtring auf einer vom Mitnehmerrad abgewandten Seite mit dem Innenring des Wälzlagers zumindest entlang eines sich ringförmig um die Drehachse erstreckenden Oberflächenbereichs des Innenrings in Kontakt ist. Bei einer Weiterentwicklung dieser Ausführungsform kann sich der Dichtring radial zur Drehachse derart erstrecken, dass er einen sich ringförmig um die Drehachse ersteckenden Abschnitt aufweist, welcher sowohl mit dem Innenring des Wälzlagers als auch mit dem Mitnehmerrad in Kontakt ist. Dadurch, dass der Dichtring nicht nur den zwischen dem Mitnehmerrad und dem Aussenring des Wälzlagers ausgebildeten Zwischenraum verschliesst, sondern auch einen sich ringförmig um die Drehachse ersteckenden Abschnitt aufweist, welcher mit dem Innenring des Wälzlagers in Kontakt ist, ist das gesamte Wälzlager besonders effizient von dem für das Kaffeepulver vorbestimmten Raumbereich im Gehäuse der Mahlvorrichtung separiert. Auf diese Weise kann beim Mahlen produziertes Kaffeepulver besonders wirksam darin gehindert werden, in Bereiche des Wälzlagers vorzudringen, in welchen die Wälzkörper des Wälzlagers angeordnet sind und in welchen die Wälzkörper des Wälzlagers mit einer Oberfläche des Aussenrings oder mit einer Oberfläche des Innenrings in Kontakt sind. Weiterhin verhindert der vorstehend genannte Dichtring aufgrund seiner Anordnung, dass Schmiermittel aus den Bereichen des Wälzlagers vorzudringen, in welchen die Wälzkörper des Wälzlagers angeordnet sind, zum Mitnehmerrad oder in den für das Kaffeepulver vorbestimmten Raumbereich im Gehäuse der Mahlvorrichtung gelangen können.

Bei einer weiteren Ausführungsform der Mahlvorrichtung umfasst der Dichtring einen sich ringförmig um die Drehachse erstreckenden Basis-Abschnitt, eine erste Dichtlippe, welche mit dem Basis-Abschnitt verbunden ist und sich vom Basis-Abschnitt radial nach aussen erstreckt, und eine zweite Dichtlippe, welche mit dem Basis-Abschnitt verbunden ist und sich vom Basis-Abschnitt radial nach aussen erstreckt. Weiterhin sind bei dieser Ausführungsform die erste Dichtlippe und die zweite Dichtlippe relativ zueinander derart angeordnet, dass die erste Dichtlippe an einem vom Basis-Abschnitt entfernten Bereich axial zur Drehachse einen Abstand zur zweiten Dichtlippe aufweist. In diesem Fall erstrecken sich die erste Dichtlippe und die zweite Dichtlippe radial zur Drehachse derart, dass diese Dichtlippen an ihren von der Drehachse entfernten Enden in Richtung der Drehachse (d.h. axial) räumlich separiert sind.

Bei einem Dichtring der vorstehend genannten Art kann die erste Dichtlippe derart angeordnet sein, dass sie mit dem Mitnehmerrad in Kontakt ist, und die zweite Dichtlippe derart angeordnet sein, dass sie mit dem Aussenring des Wälzlagers in Kontakt ist. Ein Dichtring der vorstehend genannten Art kann insbesondere derart ausgebildet sein, dass die erste Dichtlippe mit dem Mitnehmerrad zumindest entlang eines sich ringförmig um die Drehachse erstreckenden Oberflächenbereichs des Mitnehmerrads in Kontakt ist, und/oder die zweite Dichtlippe mit dem Aussenring des Wälzlagers zumindest entlang eines sich ringförmig um die Drehachse erstrechenden Oberflächenbereichs des Aussenrings in Kontakt ist.

Bei einem Dichtring der vorstehend genannten Art ist dadurch, dass die beiden Dichtlippen (d.h. die erste Dichtlippe und die zweite Dichtlippe) an ihren von der Drehachse entfernten Enden in Richtung der Drehachse (d.h. axial) räumlich separiert sind, zwischen der ersten erste Dichtlippe und der zweiten Dichtlippe ein freier Raum ausgebildet, welcher radial nach innen vom Basis-Abschnitt begrenzt ist und radial nach aussen zu dem für das Kaffeepulver vorbestimmten Raumbereich offen ist. Falls während des Mahlens ein Teil des produzierten Kaffeepulvers in diesen freien Raum zwischen der ersten Dichtlippe und der zweiten Dichtlippe vordringen und diesen freien Raum gegebenenfalls füllen sollte, erzeugt das in diesen freien Raum vorgedrungene Kaffeepulver Kräfte, welche auf die erste Dichtlippe und/oder die zweite Dichtlippe wirken, und zwar derart, dass die erste Dichtlippe gegen das Mitnehmerrad gepresst wird, und/oder derart, dass die zweite Dichtlippe gegen den Aussenring des Wälzlagers gepresst wird. Dies hat den Effekt, dass die erste Dichtlippe mit einem erhöhten Druck bzw. mit einer erhöhten Anpresskraft gegen das Mitnehmerrad gepresst wird und/oder die zweite Dichtlippe mit einem erhöhten Druck bzw. mit einer erhöhten Anpresskraft gegen den Aussenring des Wälzlagers gepresst wird. Ein Dichtring der vorstehend genannten Art hat deshalb den Vorteil, dass in den freien Raum zwischen der ersten Dichtlippe und der zweiten Dichtlippe vordringendes Kaffeepulver die Dichtwirkung des Dichtrings erhöht. Der Dichtring ermöglicht deshalb eine besonders wirksame Abdichtung eines sich unterhalb des Mitnehmerrads erstreckenden Raumbereichs.

Bei einer Weiterentwicklung eines Dichtrings der vorstehend genannten Art ist zusätzlich vorgesehen, dass der Basis-Abschnitt derart angeordnet ist, dass er mit dem Mitnehmerrad und/oder mit dem Innenring des Wälzlagers in Kontakt ist. Diese Massnahme ist geeignet, die Dichtwirkung des Dichtrings zusätzlich zu verbessern.

In allen vorstehend genannten Ausführungsformen der Mahlvorrichtung kann der Dichtring ortsfest bezüglich des Mitnehmerrads angeordnet sein. In diesem Fall wird der Dichtring während des Mahlens relativ zum Gehäuse der Mahlvorrichtung und insbesondere relativ zum Aussenring des Wälzlagers bewegt.

Vorzugsweise ist der Dichtring aus einem Kunststoff-Material (z.B. Teflon) gefertigt. Auf der Grundlage eines KunststoffMaterials sind geeignete Dichtringe bereitstellbar, welche bei einer Verwendung in einer der vorstehend genannten Mahlvorrichtungen eine geringe Gleitreibung und geringen Verschleiss zeigen und kostengünstig herstellbar sein können.

Die Mahlvorrichtung ist in Kombination mit einer Antriebseinrichtung zum Erzeugen einer Drehbewegung des Innenrings des Wälzlagers, des ersten Mahlelements und/oder des Mitnehmerrads um die Drehachse realisierbar, wobei die Antriebseinrichtung unterhalb des Mitnehmerrads angeordnet sein kann.

### Kurze Beschreibung der Zeichnungen

Weitere Einzelheiten der Erfindung und insbesondere beispielhafte Ausführungsformen der erfindungsgemässen Vorrichtung werden im Folgenden anhand der beigefügten Zeichnungen erläutert. Es zeigen:
- Fig. 1: eine Explosionsdarstellung einer Mahlvorrichtung in Kombination mit einer Antriebseinrichtung;
- Fig. 2: die Mahlvorrichtung gemäss Fig. 1 mit einem Wälzlager und einer ersten Ausführungsform eines Dichtrings, dargestellt in einem Schnitt entlang der Ebene E1 gemäss Fig. 1 in einer Ansicht in Richtung der mit dem Bezugszeichen II versehenen Pfeile gemäss Fig. 1;
- Fig. 3A: einen Ausschnitt aus Fig. 2, entsprechend einem Teil der Fig. 2, welcher in Fig. 2 durch ein mit dem Bezugszeichen A versehenes Rechteck begrenzt ist, in einer vergrösserten Darstellung;
- Fig. 3B: einen Ausschnitt aus Fig. 3A, entsprechend einem Teil der Fig. 3A, welcher in Fig. 3A durch eine mit dem Bezugszeichen B versehene Kreislinie begrenzt ist, in einer vergrösserten Darstellung;
- Fig. 4A: den Dichtring gemäss Fig. 2, in einer Draufsicht;
- Fig. 4B: den Dichtring gemäss Fig. 2, in einem Querschnitt entlang der Linie IVB-IVB gemäss Fig. 4A;
- Fig. 4C: den Dichtring gemäss Fig. 2, in einer Seitenansicht senkrecht zur Linie IVC-IVC gemäss Fig. 4A;
- Fig. 5A: die Mahlvorrichtung gemäss Fig. 1 mit einem Wälzlager und einer zweiten Ausführungsform eines Dichtrings, dargestellt in einem Schnitt entlang der Ebene E1 gemäss Fig. 1;
- Fig. 5B: einen Ausschnitt aus Fig. 5A, entsprechend einem Teil der Fig. 5A, welcher in Fig. 5A durch eine mit dem Bezugszeichen B versehene Kreislinie begrenzt ist, in einer vergrösserten Darstellung;
- Fig. 6A: den Dichtring gemäss Fig. 5A, in einer Draufsicht;
- Fig. 6B: den Dichtring gemäss Fig. 5A, in einem Querschnitt entlang der Linie VIB-VIB gemäss Fig. 6A;
- Fig. 6C: den Dichtring gemäss Fig. 5A, in einer Seitenansicht senkrecht zur Linie VIC-VIC gemäss Fig. 6A;
- Fig. 7A: eine Variante der Mahlvorrichtung gemäss Fig. 1 mit einer modifizierten Anordnung des Wälzlagers und der ersten Ausführungsform des Dichtrings, dargestellt in einem Schnitt entlang der Ebene E1 gemäss Fig. 1;
- Fig. 7B: einen Ausschnitt aus Fig. 7A, entsprechend einem Teil der Fig. 7A, welcher in Fig. 7A durch eine mit dem Bezugszeichen B versehene Kreislinie begrenzt ist, in einer vergrösserten Darstellung.

### Beschreibung von Ausführungsformen

Für dieselben Elemente in den Figuren sind jeweils dieselben Bezugszeichen verwendet, wenn nichts anderes erwähnt ist.

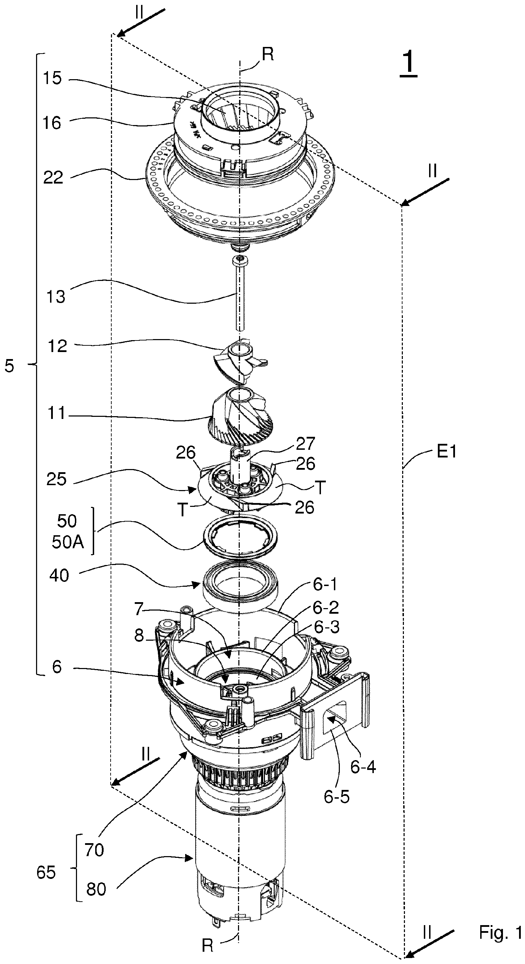

In Figur 1 ist (perspektivisch und in Explosionsdarstellung) ein Mahlwerk 1 zum Mahlen von Kaffeebohnen gezeigt, welches aus einer Mahlvorrichtung 5 und einer ein Getriebe 70 und einen Antriebsmotor 80 umfassenden Antriebseinrichtung 65 besteht.

Die Mahlvorrichtung 5 umfasst ein erstes Mahlelement 11, ein zweites Mahlelement 15 und ein Mitnehmerrad 25, wobei diese Teile von einem Gehäuse 6 umgeben sind, welches einen Austrittskanal 6-4 mit einer Austrittsöffnung 6-5 zur Ausgabe von Kaffeepulver aufweist. Das erste Mahlelement 11 ist relativ zum zweiten Mahlelement 15 um eine Drehachse R drehbar, sodass Kaffeebohnen zwischen dem ersten Mahlelement 11 und dem zweiten Mahlelement 15 zu einem Kaffeepulver zerkleinerbar sind.

Das Mahlwerk 1 ist im vorliegenden Beispiel als "Kegelmahlwerk" ausgebildet. Entsprechend ist das erste Mahlelement 11 der Mahlvorrichtung 5 als Mahlkegel mit einer Mantelfläche ausgebildet, welche derart strukturiert ist, dass sie eine Mehrzahl sich schraubenförmig um die Drehachse R erstreckende, zum Zerkleinern von Kaffeebohnen geeignete Kanten aufweist. Entsprechend ist das zweite Mahlelement 15 der Mahlvorrichtung 5 als ein Mahlring ausgebildet, welcher sich um die Drehachse R ringförmig erstreckt und eine der Drehachse R zugewandte Oberfläche aufweist. Diese der Drehachse R zugewandte Oberfläche des zweiten Mahlelements 15 ist derart strukturiert, dass sie ebenfalls eine Mehrzahl Kanten aufweist, welche zum Zerkleinern von Kaffeebohnen geeignet sind.

In der Reihenfolge vom Mahlelement 11 nach oben sind ein drehbares Förderelement 12 (im vorliegenden Beispiel ausgebildet als Schnecke), eine Befestigungsschraube 13, ein Träger 16 für das zweite Mahlelement 15 und ein Einstellring 22 für den Träger 16 vorgesehen.

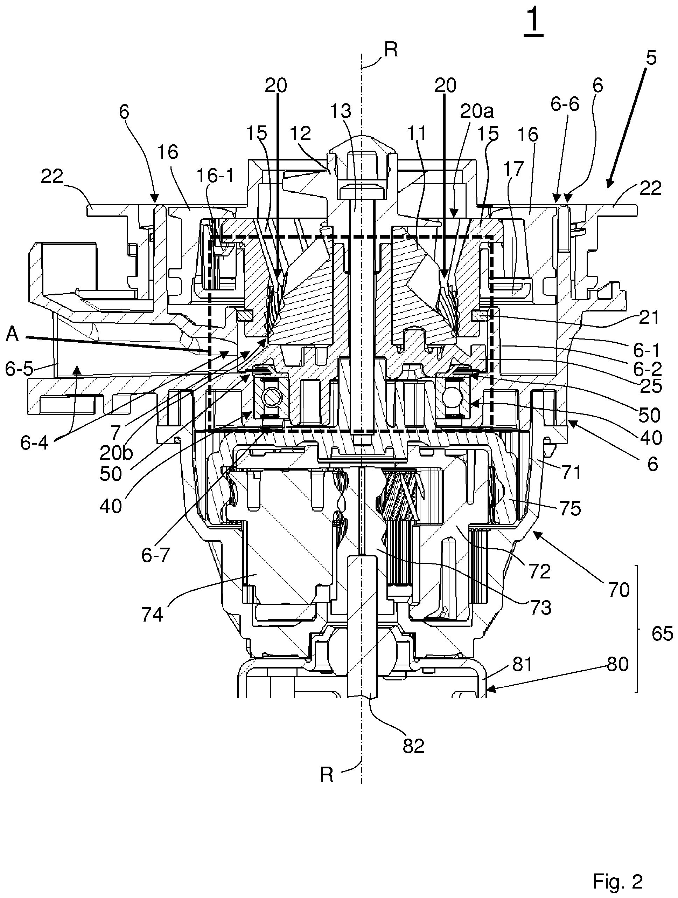

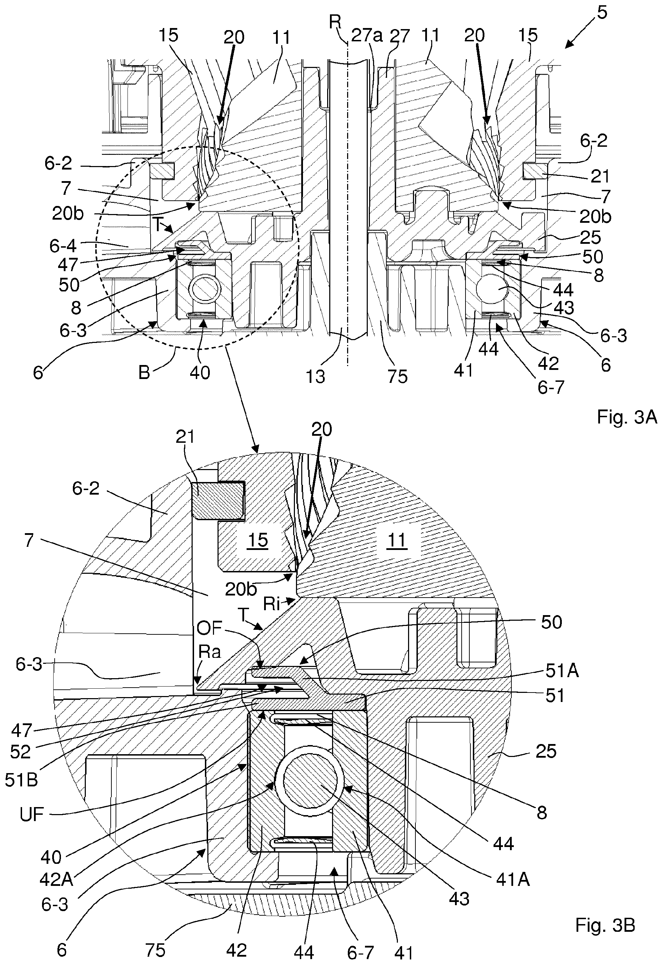

Das Mitnehmerrad 25 ist gemeinsam mit dem ersten Mahlelement 11 um die Drehachse R drehbar und umfasst einen sich radial zur Drehachse 6 erstreckenden scheibenförmigen Bereich, welcher auf einer oberen (dem ersten Mahlelement 11 und dem zweiten Mahlelement 15 zugewandten) Seite einen sich ringförmig um die Drehachse R erstreckenden Randbereich T aufweist, auf welchem das während des Betriebs des Mahlwerk 1 produzierte Kaffeepulver bei einer Rotation des Mitnehmerrads 25 um die Drehachse R zum Austrittskanal 6-4 beförderbar ist, um eine Ausgabe des produzierten Kaffeepulvers aus der Mahlvorrichtung 5 durch die Austrittsöffnung 6-5 zu ermöglichen. Das Mitnehmerrad 25 weist ausserdem in der Mitte des scheibenförmigen Bereichs eine längliche Hülse 27 auf, welche sich entlang der Drehachse R nach oben erstreckt und eine sich entlang der Drehachse R erstreckende Bohrung 27a aufweist. Wie im Folgenden im Zusammenhang mit Fig. 2, 3A und 3B noch erläutert wird, dient die Hülse 27 im Wesentlichen dazu, eine mechanische Verbindung zwischen dem Mitnehmerrad 25, dem ersten Mahlelement, dem Förderelement 12 und der Antriebseinrichtung 65 herzustellen. Um eine effiziente Beförderung von Kaffeepulver mithilfe des Mitnehmerrads 25 zu ermöglichen, sind auf dem Randbereich T des Mitnehmerrads eine Mehrzahl Mitnehmer-Flügel 26 angeordnet, welche sich - mit Bezug auf die Drehachse R - axial nach oben und radial nach aussen erstrecken. Jeder dieser Mitnehmer-Flügel 26 ist aufgrund seiner Anordnung bezüglich der Drehachse R geeignet, auf dem Randbereich T befindliches Kaffeepulver bei einer Drehung des Mitnehmerrads 25 um die Drehachse R in eine der Drehrichtung des Mitnehmerrads 25 entsprechende Richtung mitzunehmen und somit durch einen sich um die Drehachse R erstreckenden Raumbereich in Drehrichtung des Mitnehmerrads 25 zu befördern.

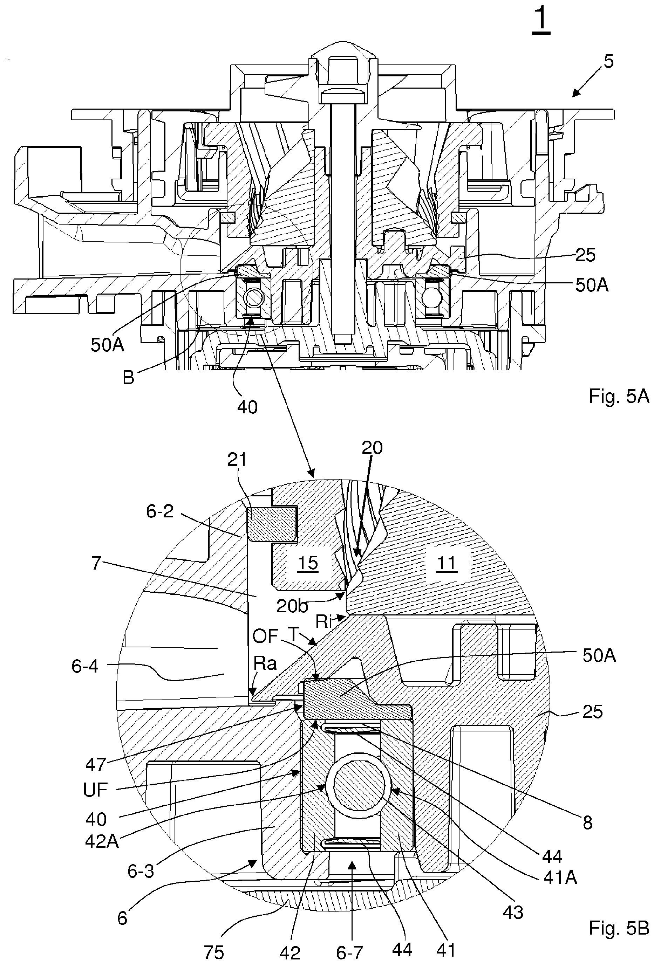

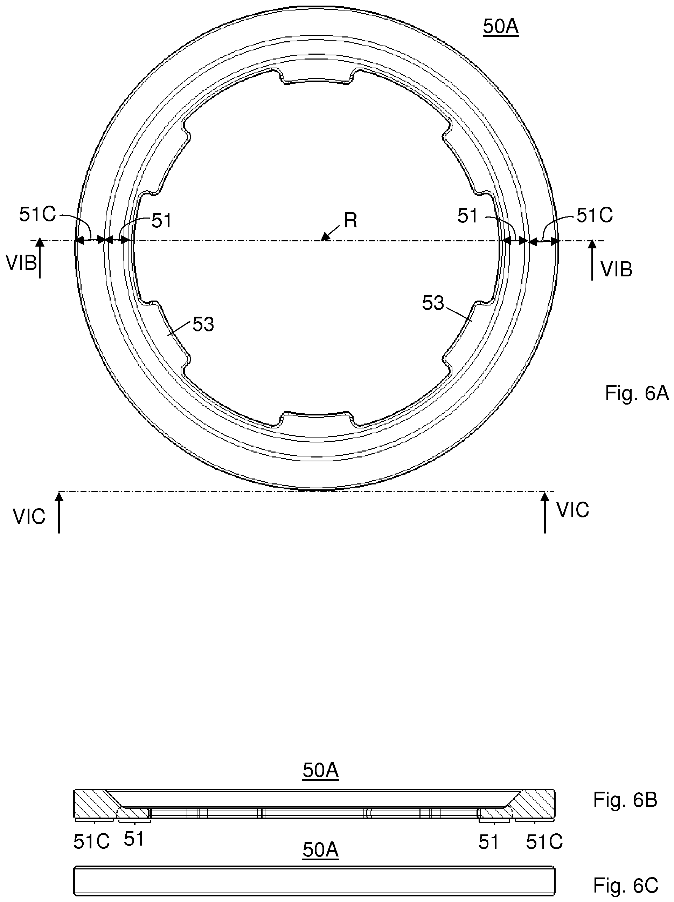

Wie Fig. 1 weiterhin andeutet, umfasst die Mahlvorrichtung 5 ein Wälzlager 40, welches als Drehlagerung für das Mitnehmerrad 25, das erste Mahlelement 11 und/oder das Förderelement 12 dient. Ausserdem ist ein Dichtring vorhanden, beispielsweise ein Dichtring 50 gemäss einer ersten Ausführungsform oder ein Dichtring 50A gemäss einer zweiten Ausführungsform. Weitere Einzelheiten der Mahlvorrichtung 5, der Antriebseinrichtung 65, des Wälzlagers 40 und des Dichtrings 50 werden im Folgenden im Zusammenhang mit Fig. 2, 3A, 3B, 4A, 4B und 4C beschrieben; weitere Einzelheiten der Mahlvorrichtung 5, des Wälzlagers 40 und des Dichtrings 50A werden im Folgenden im Zusammenhang mit Fig. 5A, 5B, 6A, 6B und 6C erläutert.

Wie aus Figur 2, 3A und 3B ersichtlich, weist das Gehäuse 6 der Mahlvorrichtung 5 eine obere Öffnung 6-6 und eine untere Öffnung 6-7 auf, durch welche Öffnungen ein vom Gehäuse 6 begrenzter Innenraum von oben bzw. von unten zugänglich ist. Die obere Öffnung 6-6 dient dazu, bei einer Montage der Mahlvorrichtung 5 verschiedene Bauteile der Mahlvorrichtung 5 von oben in dem vom Gehäuse 6 begrenzten Innenraum zu montieren oder im Betrieb der Mahlvorrichtung 5 die zu mahlenden Kaffeebohnen von oben in den Innenraum zu bringen. Die untere Öffnung 6-7 ermöglicht es, eine Verbindung zwischen der unterhalb des Gehäuses 6 platzierten Antriebseinrichtung 65 und denjenigen im Innenraum platzierten Bauteilen der Mahlvorrichtung 5 herzustellen, welche mithilfe der Antriebseinrichtung 65 angetrieben werden sollen.

Wie aus Fig. 1 und 2 ersichtlich, umfasst das Gehäuse 6 verschiedene Wände bzw. Wandbereiche (z.B. Wände bzw. Wandbereiche 6-1, 6-2 bzw. 6-3), welche dazu dienen, den vom Gehäuse 6 begrenzten Innenraum räumlich zu gliedern, um Kammern zu schaffen, welche Platz für verschiedene Bauteile der Mahlvorrichtung 5 bieten. Das Gehäuse 6 umfasst insbesondere eine erste (äussere) Wand 6-1, welche die obere Öffnung 6-6 begrenzt und ausserdem eine äussere Grenze des Innenraums bildet. Die erste Wand 6-1 erstreckt sich im Wesentlichen ringförmig um die Drehachse R und umschliesst einen an die obere Öffnung 6-6 angrenzenden Raumbereich, welcher Platz zum Anordnen des Förderelements 12, des ersten Mahlelements 11, des zweiten Mahlelements 15 und des Trägers 16 für das zweite Mahlelement bietet.

Das zweite Mahlelement 15 ist mithilfe des Trägers 16 ortsfest bezüglich des Gehäuses 6 gehalten. Zu diesem Zweck weist der Träger 16 Schnappelemente 16-1 zum Halten des zweiten Mahlelements 15 auf. Ein Befestigungsring 17 ist am Träger 16 fixiert, um die Schnappelemente 16-1 zu verriegeln, so dass das zweite Mahlelement 15 fest am Träger 16 gehalten ist. Der Einstellring 22 ist drehbar um die Drehachse R am Gehäuse 6 gelagert und derart an den Träger 16 mechanisch gekoppelt, dass durch Drehen des Einstellrings 22 um die Drehachse R der Träger 16 mit dem zweiten Mahlelement 15 in Richtung der Drehachse R nach oben oder nach unten verschiebbar ist. Auf diese Weise ist die Anordnung des zweiten Mahlelements 15 relativ zum ersten Mahlelement 11 veränderbar, sodass der Mahlgrad des zu produzierenden Kaffeepulvers einstellbar ist.

Das erste Mahlelement 11 ist bezüglich des zweiten Mahlelements 15 derart zentriert angeordnet, dass sich das zweite Mahlelement 15 ringförmig um das erste Mahlelement 11 in einem Abstand zum ersten Mahlelement 11 erstreckt und somit zwischen dem ersten Mahlelement 11 und dem zweiten Mahlelement 15 ein Mahlspalt 20 ausgebildet ist, in welchem Kaffeebohnen zwischen dem ersten Mahlelement 11 und dem zweiten Mahlelement 15 zu einem Kaffeepulver zerkleinerbar sind, falls das erste Mahlelement 11 relativ zum zweiten Mahlelement 15 um die Drehachse R gedreht wird. Um Kaffeebohnen in den Mahlspalt 20 einführen zu können, ist der Mahlspalt 20 derart geformt, dass er an einem oberen Ende einen sich ringförmig um die Drehachse R erstreckenden Bereich aufweist, welcher als Eintrittspalt 20a für Kaffeebohnen dient, wobei eine Breite des Eintrittspalt 20a derart gewählt ist, dass ganze Kaffeebohnen den Eintrittspalt 20a passieren können. Weiterhin ist der Mahlspalt 20 derart geformt, dass er an einem vom Eintrittspalt 20a entfernten Ende einen sich ringförmig um die Drehachse R erstreckenden Bereich aufweist, welcher als Austrittspalt 20b für Kaffeepulver dient, sodass das beim Mahlen im Mahlspalt 20 produzierte Kaffeepulver den Mahlspalt 20 durch den Austrittspalt 20b verlassen muss, wobei eine Breite des Austrittspalt 20b die Korngrösse des produzierten Kaffeepulvers limitiert und somit den Mahlgrad des produzierten Kaffeepulvers definiert.

Das drehbare Förderelement 12 dient dazu, durch die Öffnung 6-6 zugeführte Kaffeebohnen entlang der Drehachse R durch den Eintrittspalt 20a in den Mahlspalt 20 zwischen dem ersten Mahlelement 11 und dem zweiten Mahlelement 15 zu befördern.

Wie aus Fig. 2, 3A und 3B weiterhin ersichtlich, ist der Mahlspalt 20 über den Austrittspalt 20b mit einem Raumbereich 7 des vom Gehäuse 6 umgebenen Innenraums verbunden, welcher für produziertes Kaffeepulver vorgesehen ist und durch welchen das Kaffeepulver befördert werden muss, um zum Austrittskanal 6-4 bzw. zur Austrittsöffnung 6-5 zu gelangen. Der für das Kaffeepulver vorgesehene Raumbereich 7 ist nach oben durch das erste Mahlelement 11 und das zweite Mahlelement 15 begrenzt und wird radial nach aussen durch eine zweite Wand 6-2 limitiert, welche sich in dem vom Gehäuse 6 umgebenen Innenraum in einem Abstand zur unteren Öffnung 6-7 des Gehäuses 6 ringförmig um die Drehachse R erstreckt. Der Raumbereich 7 ist ferner nach unten durch das Mitnehmerrad 25 und insbesondere durch den Randbereich T des Mitnehmerrads 25 begrenzt. Zu diesem Zweck ist das Mitnehmerrad 25 derart bezüglich des ersten Mahlelements 11 und der zweiten Wand 6-2 angeordnet, dass der scheibenförmige, sich radial zur Drehachse R erstreckende Bereich des Mitnehmerrads 25 unter dem ersten Mahlelement 11 angeordnet ist und ausserdem der Randbereich T des Mitnehmerrads 25 sich radial zur Drehachse R derart erstreckt, dass sich ein innerer Rand Ri des Randbereichs T unmittelbar unter dem Austrittspalt 20b befindet und dass sich ein äusserer Rand Ra des Randbereichs T "dicht" an der zweiten Wand 6-2 befindet (d.h. zumindest in einem Abstand zur zweiten Wand 6-2, welcher es ermöglicht, dass das Mitnehmerrad 25 um die Drehachse 6 drehbar und dabei relativ zur zweiten Wand 6-2 bewegbar ist).

Wie Fig. 2, 3A und 3B weiterhin andeuten, weist die zweite Wand 6-2 eine Öffnung auf, welche den Raumbereich 7 mit dem Austrittskanal 6-4 verbindet, sodass Kaffeepulver radial nach aussen aus dem Raumbereich 7 in den Austrittskanal 6-4 gelangen und schliesslich die Mahlvorrichtung 5 durch die Austrittsöffnung 6-5 verlassen kann.

Wie aus Fig. 2, 3A und 3B weiterhin ersichtlich, umfasst der vom Gehäuse 6 umgebene Innenraum einen weiteren Raumbereich, welcher unterhalb des von der zweiten Wand 6-2 begrenzten Raumbereichs angeordnet ist, sich nach unten bis zur unteren Öffnung 6-7 des Gehäuses 6 erstreckt und radial nach aussen durch eine dritte Wand 6-3 begrenzt ist, welche sich ringförmig um die Drehachse R erstreckt. Der von der dritten Wand 6-3 begrenzte Raumbereich bietet u.a. Platz zum Anordnen des Wälzlagers 40.

Wie aus Fig. 2, 3A und 3B ersichtlich, umfasst das Wälzlager 40 einen sich um die Drehachse R erstreckenden Innenring 41, einen sich um die Drehachse R erstreckenden Aussenring 42 und mehrere zwischen dem Innenring 41 und dem Aussenring 42 angeordnete Wälzkörper 43, wobei der Aussenring 42 ortsfest am Gehäuse 6 in einem Abstand zum Mitnehmerrad 25 angeordnet ist, sodass ein Zwischenraum 47 zwischen dem Mitnehmerrad 25 und dem Aussenring 42 des Wälzlagers 40 ausgebildet ist. Das Wälzlager 40 ist im vorliegenden Beispiel derart platziert, dass der Aussenring 42 radial nach aussen an die dritte Wand 6-3 grenzt und der Innenring 41 durch die untere Öffnung 6-7 des Gehäuses 6 zugänglich ist.

Im vorliegenden Beispiel ist das Wälzlager 40 als Rillenkugellager ausgebildet. Dementsprechend sind die Wälzkörper 43 als Kugeln ausgebildet. Weiterhin weisen der Innenring 41 und der Aussenring jeweils an einer den Wälzkörpern 43 zugewandten Seite jeweils eine an die Form der Wälzkörper angepasste Rille auf, in welcher die Wälzkörper 43 geführt sind, falls der Innenring 41 relativ zum Aussenring 42 um die Drehachse R gedreht wird: Zu diesem Zweck ist an einem von der Drehachse R abgewandten Oberflächenbereich des Innenrings 41 eine sich um die Drehachse R erstreckende Rille 41A ausgebildet; entsprechend ist an einem der Drehachse R zugewandten Oberflächenbereich des Aussenrings 42 eine sich um die Drehachse R erstreckende Rille 42A ausgebildet. Die Rillen 41A und 42A sind hierbei relativ zu den Wälzkörpern 43 derart angeordnet, dass die Wälzkörper 43 gezwungen sind, bei einer Drehung des Innenrings 41 um die Drehachse auf dem Innenring 41 bzw. dem Aussenring 42 in der Rille 41A bzw. in der Rille 42A auf einer die Drehachse R ringförmig umgebenden Bahn endlos abzurollen. Das Wälzlager 40 ist im vorliegenden Beispiel deshalb als kombiniertes Axial-/Radial-Lager ausgebildet, welches sowohl radial als auch axial bezüglich der Drehachse R belastbar ist.

Um die Rillen 41A, 42A und die Wälzkörper 43 des Wälzlagers 40 vor Verschmutzungen zu schützen und gegebenenfalls in den Rillen 41A, 42A oder an den Wälzkörpern 43 vorhandene Schmiermittel zurückzuhalten, ist das Wälzlager 40 im vorliegenden Beispiel mit zwei ringförmigen Dichtscheiben 44 ausgestattet, welche in einem Zwischenraum zwischen dem Innenring 41 und dem Aussenring 42 relativ zueinander in einem axialen Abstand bezüglich der Drehachse R angeordnet sind, sodass die beiden Dichtscheiben 44 an zwei gegenüberliegenden Seiten der Rillen 41A, 42A bzw. der Wälzkörper 43 (im vorliegenden Beispiel oberhalb und unterhalb der Rillen 41A, 42A bzw. der Wälzkörper 43) platziert sind (Fig. 3B).

Wie aus Fig. 2 und 3A ersichtlich, ist die Antriebseinrichtung 65 an einer Unterseite des Gehäuses 6 angeordnet, wobei das Getriebe 70 der Antriebseinrichtung 65 unmittelbar an der unteren Öffnung 6-7 des Gehäuses 6 platziert ist.

Das Getriebe 70 ist im vorliegenden Beispiel als ein konventionelles Planetengetriebe ausgebildet und umfasst ein Getriebe-Gehäuse 71, welches mehrere bewegliche Teile des Getriebes 70 umgibt: ein um eine Längsachse drehbares Sonnenrad 73, einen Planetenträger 72, an welchem mehrere (beispielsweise drei) Planetenräder 74 drehbar befestigt sind; ein Hohlrad 75, welches eine Innenverzahnung aufweist. Hierbei wirken das Sonnenrad 73, die Planetenräder 74 und das Hohlrad 75 auf konventionelle Weise derart zusammen, dass das Sonnenrad 73 eine Drehung um seine Längsachse auf die Planetenräder 74 überträgt und jedes der Planetenräder 74 eine Drehung des jeweiligen Planetenrads 74 um seine Drehachse auf das Hohlrad 75 überträgt. Das Sonnenrad 73 fungiert somit als Antrieb des Getriebes 70 und das Hohlrad 75 als Abtrieb des Getriebes 70.

Um das Sonnenrad 73 antreiben zu können, ist unterhalb des Getriebes 70 der Antriebsmotor 80 angeordnet. Der Antriebsmotor 80 umfasst ein separates Gehäuse 81, welches ortsfest am Getriebe-Gehäuse 71 gehalten ist, wobei eine Antriebswelle 82 des Antriebsmotors 80 starr mit dem Sonnenrad 73 verbunden ist, sodass das Sonnenrad 73 synchron mit der Antriebswelle 82 des Antriebsmotors 80 drehbar ist.

Wie Fig. 2 und 3A andeuten, ist das Getriebe 70 derart angeordnet, dass das Sonnenrad 73 und das Hohlrad 75 um die Drehachse R drehbar sind. Das Mitnehmerrad 25 ist starr mit dem Innenring 41 des Wälzlagers 40 verbunden, sodass das Mitnehmerrad 25 synchron mit dem Innenring 41 um die Drehachse R drehbar ist und bei einer derartigen Drehung mittels der Wälzkörper 43 am Aussenring 42 des Wälzlagers 40 mit einer grossen Präzision geführt ist.

Wie Fig. 2 und 3A weiterhin andeuten, sind das Förderelement 12, das erste Mahlelement 11 und das Hohlrad 75 (bzw. der Abtrieb) des Getriebes 70 ebenfalls starr mit dem Mitnehmerrad 25 bzw. dem Innenring 41 des Wälzlagers 40 verbunden. Das Hohlrad 75, das Mitnehmerrad 25, das erste Mahlelement 11 und das Förderelement 12 sind dabei - in dieser Reihenfolge - entlang der Drehachse R hintereinander angeordnet. Das Hohlrad 75, das Mitnehmerrad 25, das erste Mahlelement 11 und das Förderelement 12 sind dabei derart komplementär geformt, dass das Hohlrad 75, das erste Mahlelement 11 und das Förderelement 12 formschlüssig mit dem Mitnehmerrad 25 verbindbar sind. Das erste Mahlelement 11 weist zu diesem Zweck eine zentrale Bohrung auf, welche sich entlang der Drehachse R erstreckt und derart geformt ist, dass die Hülse 27 des Mitnehmerrads 25 von der Unterseite des ersten Mahlelements 11 formschlüssig in die zentrale Bohrung des ersten Mahlelements 11 einsetzbar ist, und zwar derart, dass das Förderelement 12 am oberen Ende der Hülse 27 formschlüssig in die Bohrung 27a einsetzbar ist, welche in der Hülse 27 entlang der Drehachse R ausgebildet ist. Das Hohlrad 75 ist wiederum derart geformt, dass zumindest ein Abschnitt des Hohlrads 75 von der Unterseite des Mitnehmerrads 25 her formschlüssig in die Bohrung 27a im Mitnehmerrad 25 einsetzbar ist.

Wie Fig. 2 und 3A weiterhin andeuten, sind das Hohlrad 75, das Mitnehmerrad 25, das erste Mahlelement 11 und das Förderelement 12 mittels der Schraube 13 zu einer starren Baugruppe verbunden, welche als Ganzes zusammen mit Innenring 41 des Wälzlagers 40 relativ zum Gehäuse 6 um die Drehachse R drehbar ist. Das Hohlrad 75, das Mitnehmerrad 25, das erste Mahlelement 11 und das Förderelement 12 sind zu diesem Zweck derart geformt, dass die Schraube 13 durch durchgehende Bohrungen, welche sich durch das Förderelement 12, das erste Mahlelement 11 und das Mitnehmerrad 25 entlang der Drehachse R erstecken, bis zum Hohlrad 75 durchsteckbar ist, sodass die Schraube 13 an einem am Hohlrad 75 ausbildeten (in den Figuren nicht dargestellten) Gewinde angeschraubt werden kann, um das Förderelement 12, das erste Mahlelement 11 und das Mitnehmerrad 25 am Hohlrad 75 festzuklemmen.

Da der Innenring 41 mittels der Wälzkörper 43 am Aussenring 42 des Wälzlagers 40 geführt ist, sind das Förderelement 12, das erste Mahlelement 11, das Mitnehmerrad 25 und das Hohlrad 75 bei einer Rotation um die Drehachse R dank des Wälzlagers 40 mit Bezug auf das Gehäuse 6 und somit mit Bezug auf das zweite Mahlelement 15 präzise geführt.

Im Betrieb des Mahlwerks 1 werden zunächst ganze Kaffeebohnen durch den Eintrittspalt 20a in den Mahlspalt 20 zwischen dem ersten Mahlelement 11 und dem zweiten Mahlelement 15 gebracht und das Hohlrad 75, das Mitnehmerrad 25, das erste Mahlelement 11 und das Förderelement 12 mittels des Antriebsmotors 80 veranlasst, gemeinsam synchron um die Drehachse R zu rotieren. Hierbei werden die Kaffeebohnen im Mahlspalt 20 kontinuierlich zu Kaffeepulver zerkleinert, welches den Mahlspalt 20 durch den Austrittsspalt 20b kontinuierlich verlässt und dabei unterhalb des Austrittsspalt 20b auf den Randbereich T des Mitnehmerrad 25 fällt, und zwar derart, dass das Kaffeepulver zunächst in der Nähe des inneren Randes Ri auf den Randbereich T fallen. Während der Rotation des Mitnehmerrads 25 um die Drehachse 6 wird das auf den Randbereich T gefallene Kaffeepulver durch den Raumbereich 7 radial nach aussen in Richtung auf den äusseren Rand Ra des Randbereichs T bzw. in Richtung auf die zweite Wand 6-2 und schliesslich entlang der Wand 6-2 gefördert, bis das auf dem Randbereich T geförderte Kaffeepulver den Austrittskanal 6-4 erreicht und den Raumbereich 7 durch den Austrittskanal 6-4 verlassen kann.

Um zu verhindern, dass Kaffeepulver den Raumbereich 7 entlang der Wand 6-2 nach oben (und in unerwünschter Weise nicht durch Austrittskanal 6-4) verlassen kann, ist die Mahlvorrichtung 5 mit einem Dichtring 21 versehen, welcher zwischen dem zweiten Mahlelement 15 und der zweiten Wand 6-2 des Gehäuses 6 eingeklemmt ist (Fig. 2, 3A und 3B). Der Dichtring 21 kann beispielsweise als Flachring ausgebildet und aus Kunststoff gefertigt sein.

Um zu verhindern, dass Kaffeepulver den Raumbereich 7 entlang der Wand 6-2 nach unten auf eine unerwünschte Weise verlassen kann, ist im Falle der Mahlvorrichtung 5 gemäss Fig. 2 der Dichtring 50 vorgesehen.

Der Dichtring 50 hat im vorliegenden Beispiel gemäss Fig. 2 insbesondere die Funktion zu verhindern, dass aus dem Raumbereich 7 kommendes Kaffeepulver den Zwischenraum 47, welcher zwischen dem Aussenring 42 des Wälzlagers 40 und dem Mitnehmerrad 25 ausgebildet ist, radial zur Drehachse R in Richtung auf die Drehachse 6 durchdringen kann.

Der Zwischenraum 47 erstreckt sich im vorliegenden Beispiel gemäss Fig. 2 oberhalb des Aussenrings 42 sowohl radial als axial zur Drehachse R. Der Zwischenraum 47 erstreckt sich in diesem Fall insbesondere derart ringförmig um die Drehachse R, dass er sich über dem Aussenring 42 (insbesondere in einer axial zur Drehachse R gerichteten Projektion des Aussenrings 42 auf das Mitnehmerrad 25) axial zur Drehachse R zwischen einer unteren Begrenzungsfläche UF und einer oberen Begrenzungsfläche OF erstreckt, wobei die untere Begrenzungsfläche UF des Zwischenraums 47 durch einen oberen Oberflächenbereich des Aussenrings 42 und die obere Begrenzungsfläche OF des Zwischenraums 47 durch einen unteren Oberflächenbereich des Mitnehmerrads 25 gebildet ist. In diesem Fall ist demnach die untere Begrenzungsfläche UF des Zwischenraums 47 ortsfest bezüglich des Aussenrings 42 ausgebildet und die obere Begrenzungsfläche OF des Zwischenraums 47 ist ortsfest bezüglich des Mitnehmerrads 25 ausgebildet.

Der Dichtring 50 erstreckt sich durch den sich ringförmig um die Drehachse R erstreckenden Zwischenraum 47 insbesondere derart, dass er sowohl an der unteren Begrenzungsfläche UF des Zwischenraums 47 als auch an der oberen Begrenzungsfläche OF des Zwischenraums 47 anliegt. Wie ersichtlich, erstreckt sich der Dichtring 50 relativ zum Mitnehmerrad 25 und zum Aussenring 42 des Wälzlagers 40 derart, dass der Dichtring 50 den Zwischenraum 47 verschliesst, zumindest in dem Sinne, dass der Dichtring 50 den Zwischenraum 47 mechanisch gegen ein Vordringen von Kaffeepulver derart blockiert, dass Kaffeepulver den Zwischenraum 47 nicht radial zur Drehachse R in Richtung auf die Drehachse R durchdringen kann.

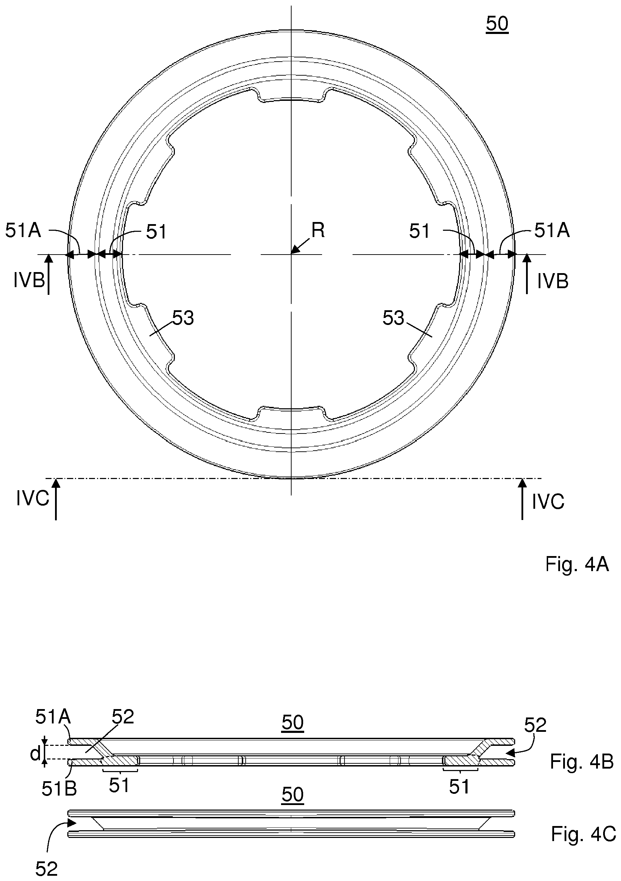

Wie Fig. 3A, 3B, 4A, 4B und 4C andeuten, ist der Dichtring 50 im vorliegenden Beispiel als Axial-Dichtring mit einer sogenannten "Y-Form" ausgebildet. Dementsprechend umfasst der Dichtring 50 einen sich ringförmig um die Drehachse R erstreckenden Basis-Abschnitt 51, eine erste Dichtlippe 51A, welche mit dem Basis-Abschnitt 51 verbunden ist und sich vom Basis-Abschnitt 51 radial nach aussen erstreckt, und eine zweite Dichtlippe 51B, welche mit dem Basis-Abschnitt 51 verbunden ist und sich vom Basis-Abschnitt 51 radial nach aussen erstreckt. Dabei sind die erste Dichtlippe 51A und die zweite Dichtlippe 51B relativ zueinander derart angeordnet, dass die erste Dichtlippe 51A an einem vom Basis-Abschnitt 51 entfernten Bereich axial zur Drehachse R einen Abstand d zur zweiten Dichtlippe 51B aufweist (in einem Querschnitt radial zur Drehachse R betrachtet, bildet der Basis-Abschnitt 51 zusammen mit der erste Dichtlippe 51A und die zweite Dichtlippe 51B eine Struktur mit einer Form, welche der Form des Buchstabens "Y" ähnelt, was in diesem Zusammenhang die Bezeichnung "Y-Form" rechtfertigen soll).

Der Dichtring 50 ist im vorliegenden Beispiel derart geformt und angeordnet, dass die erste Dichtlippe 51A im Zwischenraum 47 über dem Aussenring 42 im Bereich einer axial zur Drehachse R gerichteten Projektion des Aussenrings 42 auf das Mitnehmerrad 25 mit dem Mitnehmerrad 25 in Kontakt ist und die zweite Dichtlippe 51B im Zwischenraum 47 mit dem Aussenring 42 des Wälzlagers 40 in Kontakt ist. Zu diesem Zweck kann der Dichtring 50 insbesondere derart geformt und angeordnet sein, dass die erste Dichtlippe 51A auf einer dem Mitnehmerrad 25 zugewandten Seite mit dem Mitnehmerrad 25 zumindest entlang eines sich ringförmig um die Drehachse R erstreckenden Oberflächenbereichs des Mitnehmerrads 25 in Kontakt ist, und/oder die zweite Dichtlippe 51B auf einer vom Mitnehmerrad 25 abgewandten Seite mit dem Aussenring 42 des Wälzlagers 40 zumindest entlang eines sich ringförmig um die Drehachse R erstrechenden Oberflächenbereichs auf einer Oberseite des Aussenrings 42 in Kontakt ist. Die Dichtwirkung des Dichtrings 50 ist hierbei umso grösser, je grösser der Druck bzw. die Anpresskraft ist, mit welchem bzw. mit welcher die erste Dichtlippe 51A an das Mitnehmerrad 25 bzw. die zweite Dichtlippe 51B an den Aussenring 42 des Wälzlagers 40 gepresst ist.

Wie insbesondere Fig. 3B andeutet, ist der Dichtring 50 im vorliegenden Beispiel ausserdem derart geformt und angeordnet, dass zwischen der ersten erste Dichtlippe 51A und der zweiten Dichtlippe 51B ein freier Raum 52 ausgebildet ist, welcher radial nach innen vom Basis-Abschnitt 51 begrenzt ist und radial nach aussen zu dem für das Kaffeepulver vorbestimmten Raumbereich 7 offen ist. In diesem Fall kann zwar im Betrieb der Mahlvorrichtung 5 produziertes Kaffeepulver aus dem Raumbereich 7 bis in den zwischen der erste Dichtlippe 51A und der zweiten Dichtlippe 51B ausgebildeten freien Raum 52 vordringen. Durch das Vordringen von Kaffeepulver in den freien Raum 52 wird jedoch allenfalls der Druck bzw. die Anpresskraft, mit welchem bzw. mit welcher die erste Dichtlippe 51A an das Mitnehmerrad 25 bzw. die zweite Dichtlippe 51B an den Aussenring 42 des Wälzlagers 40 gepresst ist, zusätzlich vergrössert, was die Dichtwirkung des Dichtrings 50 noch verbessert.

Der Dichtring 50 kann weiterhin derart ausgebildet sein, dass der Basis-Abschnitt 51 derart angeordnet ist, dass er mit dem Mitnehmerrad 25 und/oder mit dem Innenring 41 des Wälzlagers 40 in Kontakt ist. Falls der Basis-Abschnitt 51 mit dem Innenring 41 des Wälzlagers 40 in Kontakt gebracht ist, hat dies den Effekt, dass der Dichtring 50 das Wälzlager 40 an seiner dem Mitnehmerrad 25 zugewandten Seite derart überdeckt, dass der Dichtring 50 sowohl den Aussenring 42 des Wälzlagers 40 an seiner dem Mitnehmerrad 25 zugewandten Seite als auch den Innenring 41 des Wälzlagers 40 an seiner dem Mitnehmerrad 25 zugewandten Seite berührt. In dieser Anordnung ist der Dichtring 50 geeignet, das Vordringen von Kaffeepulver in den zwischen dem Innenring 41 und dem Aussenring 42 ausgebildeten Bereich des Wälzlagers 40 zu blockieren, in dem die Rillen 41A und 42A des Wälzlagers 40 und die Wälzkörper 43 angeordnet sind.

Im Beispiel gemäss Fig. 2, 3A und 3B ist der Dichtring 50 derart angeordnet, dass der Basis-Abschnitt 51 mit dem Mitnehmerrad 25 und mit dem Innenring 41 des Wälzlagers 40 in Kontakt ist. In diesem Fall ist es möglich, den Dichtring 50 derart am Mitnehmerrad 25 zu fixieren, dass der Basis-Abschnitt 51 zwischen dem Innenring 41 des Wälzlagers 40 und dem Mitnehmerrad 25 eingeklemmt und somit ortsfest relativ zum Mitnehmerrad 25 und zum Innenring 41 gehalten ist. In diesem Fall ist der Dichtring 50 derart mit dem Innenring 41 des Wälzlagers 40 und dem Mitnehmerrad 25 verbunden, dass der Innenring 41 im Betrieb der Mahlvorrichtung 5 um die Drehachse R gedreht wird, sobald das Hohlrad 75, das Mitnehmerrad 25, das erste Mahlelement 11 und das Förderelement 12 mithilfe der Antriebseinrichtung 65 um die Drehachse R gedreht werden. In diesem Fall wird der Dichtring 50 derart mit dem Mitnehmerrad 25 mitbewegt, dass die zweite Dichtlippe 51B relativ zum Aussenring 42 bewegt wird und folglich relativ zur Oberfläche des Aussenrings 42 gleiten muss.

Wie Fig. 4A andeutet, ist der Dichtring 50 mit mehreren Stegen 53 versehen, welche - ausgehend vom Basis-Abschnitt 51 - radial nach innen ragen und einstückig mit dem Basis-Abschnitt 51 verbunden sind. Die Stege 53 bieten eine einfache Möglichkeit, den Dichtring 50 derart am Mitnehmerrad 25 anzuordnen, dass der Dichtring 50 nicht relativ zum Mitnehmerrad 25 um die Drehachse R drehbar ist. Zu diesem Zweck ist es beispielsweise möglich, am Mitnehmerrad 25 geeignete Ausnehmungen auszubilden, welche komplementär zu den Stegen 53 ausgebildet sind und in welche die Stege 53 formschlüssig eingesetzt werden können, um eine Drehung des Dichtrings 50 relativ zum Mitnehmerrad 25 zu blockieren.

Die Mahlvorrichtung 5 gemäss Fig. 5A unterscheidet sich von der Mahlvorrichtung 5 gemäss Fig. 2 bzw. 3A lediglich dadurch, dass der Dichtring 50 durch den Dichtring 50A ersetzt ist, welcher sich vom Dichtring 50 hautsächlich hinsichtlich der Form seines Querschnitts radial zur Drehachse R unterscheidet.

Wie insbesondere Fig. 5B, 6A und 6B andeuten, umfasst der Dichtring 50A - ebenso wie der Dichtring 50 - einen sich ringförmig um die Drehachse R erstreckenden Basis-Abschnitt 51. Der Dichtring 50 umfasst jedoch zusätzlich einen äusseren Abschnitt 51C, welcher sich an der von der Drehachse R entfernten Seite des Basis-Abschnitts 51 ringförmig um die Drehachse R erstreckt und mit dem Basis-Abschnitt 51 einstückig ausgebildet ist. Während sich der Basis-Abschnitt 51 radial zur Drehachse R derart erstreckt, dass seine Erstreckung axial zur Drehachse R im Wesentlichen konstant ist, erstreckt sich der äussere Abschnitt 51C radial zur Drehachse R derart, dass seine Erstreckung axial zur Drehachse R als Funktion des Abstands von der Drehachse R nicht konstant ist, sondern radial nach aussen grösser wird. Der äussere Abschnitt 51C hat deshalb zumindest an seinem von der Drehachse R entfernten Rand eine grössere Erstreckung axial zur Drehachse 6 als der Basis-Abschnitt 51.

Wie Fig. 5B, 6A und 6B weiter andeuten, ist der Dichtring 50A in der Mahlvorrichtung 5 derart platziert, dass der Basis-Abschnitt 51 zwischen dem Innenring 41 des Wälzlagers 40 und dem Mitnehmerrad 25 eingeklemmt und somit ortsfest relativ zum Mitnehmerrad 25 und zum Innenring 41 gehalten ist. Der äussere Abschnitt 51C erstreckt sich durch den zwischen dem Aussenring 42 des Wälzlagers 40 und dem Mitnehmerrad 25 ausgebildeten Zwischenraum 47 derart axial zur Drehachse, dass der äussere Abschnitt 51C den Zwischenraum 47 verschliesst.

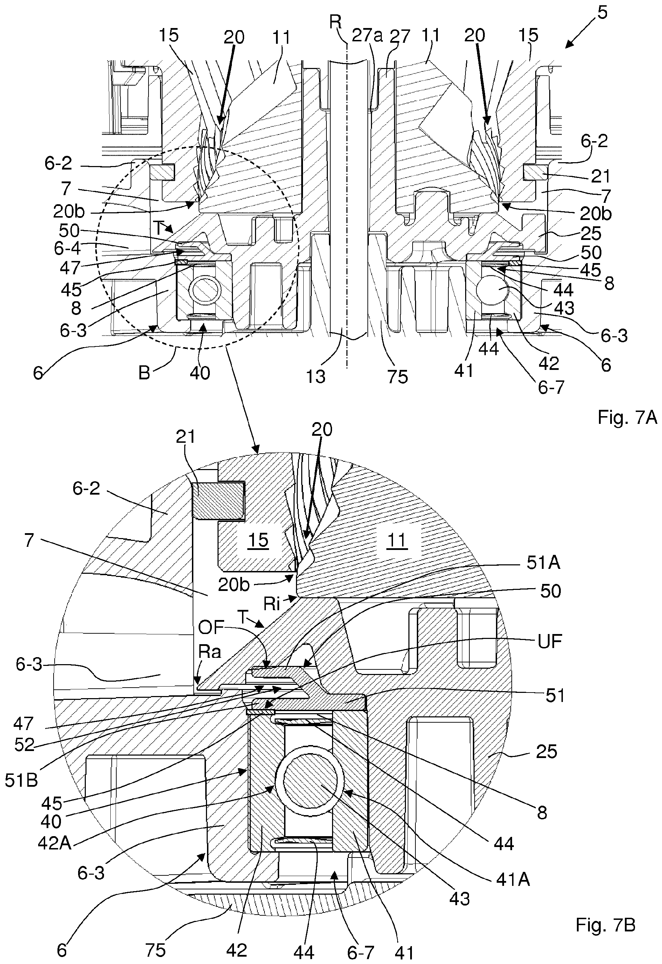

Fig. 7A und 7B zeigen eine Mahlvorrichtung 5, welche eine Variante der Mahlvorrichtung 5 gemäss Fig. 2 bzw. 3A und 3B dargestellt, wobei die Mahlvorrichtung 5 gemäss Fig. 7A und 7B und die Mahlvorrichtung 5 gemäss Fig. 2 bzw. 3A und 3B sich im Wesentlichen hinsichtlich der Anordnung des Dichtrings 50 relativ zum Aussenring 42 des Wälzlagers 40 unterscheiden. Die Mahlvorrichtung 5 gemäss Fig. 7A und 7B und die Mahlvorrichtung 5 gemäss Fig. 2 bzw. 3A und 3B weisen je ein Wälzlager 40 mit einem Innenring 41 und einem Aussenring 42 auf, wobei das Wälzlager 40 im Falle der Mahlvorrichtung 5 gemäss Fig. 7A und 7B und im Falle Mahlvorrichtung 5 gemäss Fig. 2 bzw. 3A und 3B jeweils identisch mit Bezug auf das Gehäuse 6 und mit Bezug auf das Mitnehmerrad 25, das erste Mahlelement 11 und die Drehachse R angeordnet ist: Insbesondere ist der Aussenring 42 des Wälzlagers 40 sowohl im Falle der Mahlvorrichtung 5 gemäss Fig. 7A und 7B als auch im Falle der Mahlvorrichtung 5 gemäss Fig. 2 bzw. 3A und 3B jeweils derart angeordnet, dass eine radial aussen liegende Oberfläche des Aussenrings 42 jeweils an der dritten Wand 6-3 des Gehäuses 6 anliegt.

Der Dichtring 50 weist im Falle der Mahlvorrichtung 5 gemäss Fig. 7A und 7B und im Falle Mahlvorrichtung 5 gemäss Fig. 2 bzw. 3A und 3B jeweils dieselbe Form auf und ist im Falle der Mahlvorrichtung 5 gemäss Fig. 7A und 7B und im Falle Mahlvorrichtung 5 gemäss Fig. 2 bzw. 3A und 3B jeweils insofern identisch angeordnet, als der Basis-Abschnitt 51 des Dichtrings 50 jeweils mit dem Mitnehmerrad 25 und mit dem Innenring 41 des Wälzlagers 40 in Kontakt ist, beispielsweise derart, dass der Basis-Abschnitt 51 zwischen dem Innenring 41 des Wälzlagers 40 und dem Mitnehmerrad 25 eingeklemmt und somit ortsfest relativ zum Mitnehmerrad 25 und zum Innenring 41 gehalten ist.

Die Mahlvorrichtung 5 gemäss Fig. 7A und 7B und die Mahlvorrichtung 5 gemäss Fig. 2 bzw. 3A und 3B unterscheiden sich hinsichtlich der Anordnung des Wälzlagers 40 und des Dichtrings 50 im Wesentlichen dadurch, dass im Falle der Mahlvorrichtung 5 gemäss Fig. 7A und 7B über dem Aussenring 40 eine flache Ringscheibe 45 platziert ist, welche sich ringförmig um die Drehachse R erstreckt. Die Ringscheibe 45 erstreckt sich im Wesentlichen derart parallel zu einer senkrecht zur Drehachse R stehenden Ebene, dass die Ringscheibe 45 einerseits auf einer oberen Oberfläche des Aussenrings 42 liegt und ausserdem eine äussere Umfangsfläche der Ringscheibe 45 an der dritten Wand 6-3 des Gehäuses 6 anliegt.

Im Falle der Mahlvorrichtung 5 gemäss Fig. 7A und 7B ist dementsprechend eine obere Oberfläche des Aussenrings 42 mit der Ringscheibe 45 bedeckt. Die Ringscheibe 45 kann derart geformt sein, dass die Ringscheibe 45, wenn sie (wie in Fig. 7A und 7B dargestellt) auf der oberen Oberfläche des Aussenrings 42 platziert ist, an der äusseren Peripherie der Ringscheibe 45 an der dritten Wand 6-3 des Gehäuses 6 geklemmt ist, sodass der Aussenring 42 des Wälzlagers 40 mithilfe der Ringscheibe 45 in seiner Lage an der dritten Wand 6-3 fixiert (z.B. festgeklemmt) werden kann.

Im Falle der Mahlvorrichtung 5 gemäss Fig. 7A und 7B ist zwischen dem Aussenring 42 des Wälzlagers 40 und dem Mitnehmerrad 25 ein Zwischenraum 47 ausgebildet, welcher sich oberhalb des Aussenrings 42 und insbesondere oberhalb der Ringscheibe 45 ringförmig um die Drehachse R und axial zur Drehachse R zwischen einer unteren Begrenzungsfläche UF und einer oberen Begrenzungsfläche OF erstreckt. Der Zwischenraum 47 erstreckt sich in diesem Fall insbesondere derart ringförmig um die Drehachse R, dass er sich über dem Aussenring 42 und über der Ringscheibe 45 (insbesondere in einer axial zur Drehachse R gerichteten Projektion des Aussenrings 42 auf das Mitnehmerrad 25) axial zur Drehachse R zwischen einer unteren Begrenzungsfläche UF und einer oberen Begrenzungsfläche OF erstreckt, wobei die untere Begrenzungsfläche UF des Zwischenraums 47 durch einen oberen Oberflächenbereich der Ringscheibe 45 und die obere Begrenzungsfläche OF des Zwischenraums 47 durch einen unteren Oberflächenbereich des Mitnehmerrads 25 gebildet ist. In diesem Fall ist demnach die untere Begrenzungsfläche UF des Zwischenraums 47 ortsfest bezüglich der Ringscheibe 45 ausgebildet und die obere Begrenzungsfläche OF des Zwischenraums 47 ist ortsfest bezüglich des Mitnehmerrads 25 ausgebildet.

Der Dichtring 50 ist im vorliegenden Beispiel derart geformt und angeordnet, dass die erste Dichtlippe 51A im Zwischenraum 47 über dem Aussenring 42 im Bereich einer axial zur Drehachse R gerichteten Projektion des Aussenrings 42 auf das Mitnehmerrad 25 mit dem Mitnehmerrad 25 in Kontakt ist und die zweite Dichtlippe 51B im Zwischenraum 47 mit der Ringscheibe 45 (aber nicht mit dem Aussenring 42 des Wälzlagers 40) in Kontakt ist.

Die Ringscheibe 45 kann vorzugsweise aus einem Material gebildet sein, welches eine geringe Gleitreibung zwischen der Ringscheibe 45 und dem Dichtring 50 gewährleistet. Auf diese Weise kann ein Verschleiss des Dichtrings reduziert bzw. minimiert werden für den Fall, dass das Mitnehmerrad 25 zusammen mit dem ersten Mahlelement 11 um die Drehachse R rotiert. Wie Fig. 3A, 3B, 5B und 7B andeuten, sind sowohl der Dichtring 50 als auch der Dichtring 50A derart angeordnet, dass der Dichtring 50 bzw. der Dichtring 50A einen sich unterhalb des Mitnehmerrad 25 erstreckenden Raumbereich 8 derart von dem für das Kaffeepulver vorbestimmten Raumbereich 7 separiert, dass Kaffeepulver nicht in den Raumbereich 8 vordringen kann.

Die Dichtringe 50 und 50A können beispielsweise aus einem Kunststoff-Material (z.B. Teflon) gefertigt sein.

Es sei darauf hingewiesen, dass das oben beschriebene Wälzlager 40 durch ein Wälzlager eines anderen Typs ersetzt werden kann, beispielsweise durch ein Radial-Lager oder vorzugsweise durch ein kombiniertes Axial-/Radial-Lager, welches sowohl radial als auch axial bezüglich der Drehachse R belastbar ist, z.B. ein Zylinderrollenlager, Kegelrollenlager, Pendelrollenlager, Tonnenrollenlager oder Nadellager.

Weiterhin sind das erste Mahlelement 11 und das zweite Mahlelement 15 durch scheibenförmige Mahlelemente eines Scheibenmahlwerks (wie in EP 2 984 973 A1 offenbart) ersetzbar.

## Patentansprüche

1. Mahlvorrichtung (5) zum Mahlen von Kaffeebohnen, welche umfasst:
ein erstes Mahlelement (11) und ein zweites Mahlelement (15), wobei das erste Mahlelement (11) relativ zum zweiten Mahlelement (15) um eine Drehachse (R) derart drehbar ist, dass Kaffeebohnen zwischen dem ersten Mahlelement (11) und dem zweiten Mahlelement (15) zu einem Kaffeepulver zerkleinerbar sind;
ein Mitnehmerrad (25), welches gemeinsam mit dem ersten Mahlelement (11) um die Drehachse (R) drehbar ist und derart angeordnet ist, dass bei einer Drehung des Mitnehmerrads (25) um die Drehachse (R) das Kaffeepulver auf einem Randbereich (T) des Mitnehmerrads (25) durch einen für das Kaffeepulver vorbestimmten Raumbereich (7) zu einem Austrittskanal (6-4) zur Ausgabe des Kaffeepulvers aus der Mahlvorrichtung (5) beförderbar ist;
ein Gehäuse (6), welches das erste Mahlelement (11), das zweite Mahlelement (15), das Mitnehmerrad (25) und den für das Kaffeepulver vorbestimmten Raumbereich (7) umgibt und den Austrittskanal (6-4) umfasst, wobei das zweite Mahlelement (15) ortsfest relativ zum Gehäuse (6) angeordnet ist;
eine Drehlagerung zur Lagerung des ersten Mahlelements (11) und/oder des Mitnehmerrads (25), sodass das erste Mahlelement (11) und das Mitnehmerrad (25) um die Drehachse (R) relativ zum Gehäuse (6) drehbar sind, wobei die Drehlagerung ein Wälzlager (40) umfasst, welches einen sich um die Drehachse (R) erstreckenden Innenring (41), einen sich um die Drehachse (R) erstreckenden Aussenring (42) und mehrere zwischen dem Innenring (41) und dem Aussenring (42) angeordnete Wälzkörper (43) aufweist, wobei der Aussenring ortsfest am Gehäuse (6) in einem Abstand zum Mitnehmerrad (25) angeordnet ist, sodass zwischen dem Mitnehmerrad (25) und dem Aussenring (42) des Wälzlagers (40) ein sich ringförmig um die Drehachse (R) erstreckender Zwischenraum (47) ausgebildet ist, welcher sich oberhalb des Aussenrings (42) axial zur Drehachse (R) zwischen einer unteren Begrenzungsfläche (UF) und einer oberen Begrenzungsfläche (OF) erstreckt, wobei die untere Begrenzungsfläche (UF) des Zwischenraums (47) ortsfest bezüglich des Aussenrings (42) und die obere Begrenzungsfläche (OF) des Zwischenraums (47) ortsfest bezüglich des Mitnehmerrad (25) ausgebildet ist und wobei das erste Mahlelement (11) und das Mitnehmerrad (25) ortsfest relativ zum Innenring des Wälzlagers (40) angeordnet sind und der Innenring (11) mittels der Wälzkörper (43) am Aussenring (42) gestützt ist, sodass das erste Mahlelement (11), das Mitnehmerrad (25) und der Innenring (41) gemeinsam um die Drehachse (R) drehbar sind;
ein Dichtelement, welches sich ringförmig um die Drehachse (R) erstreckt und ausgebildet ist, ein Vordringen von Kaffeepulver aus dem für das Kaffeepulver vorbestimmten Raumbereich (7) in einen Raumbereich (8) unterhalb des Mitnehmerrads (25) zu verhindern;
**dadurch gekennzeichnet, dass**
das Dichtelement als ein Axial-Dichtring (50, 50A) ausgebildet ist, welcher sich durch den sich ringförmig um die Drehachse (R) erstreckenden Zwischenraum (47) derart erstreckt, dass der Axial-Dichtring (50, 50A) sowohl an der unteren Begrenzungsfläche (UF) des Zwischenraums (47) als auch an der oberen Begrenzungsfläche (OF) des Zwischenraums (47) anliegt.

2. Mahlvorrichtung (5) nach Anspruch 1, wobei das Wälzlager (40) als Radial-Lager ausgebildet ist, welches zumindest radial bezüglich der Drehachse (R) belastbar ist, oder
das Wälzlager (40) als kombiniertes Axial-/Radial-Lager ausgebildet ist, welches sowohl radial als auch axial bezüglich der Drehachse (R) belastbar ist.

3. Mahlvorrichtung (5) nach Anspruch 1 oder 2, wobei das Wälzlager (40) als Rillenkugellager, Zylinderrollenlager, Kegelrollenlager, Pendelrollenlager, Tonnenrollenlager oder Nadellager ausgebildet ist.

4. Mahlvorrichtung (5) nach einem der Ansprüche 1 - 3, wobei der Dichtring (50, 50A) zumindest mit dem Mitnehmerrad (25) und dem Aussenring (42) des Wälzlagers (40) in Kontakt ist.

5. Mahlvorrichtung (5) nach einem der Ansprüche 1-4, wobei der Dichtring (50, 50A) derart geformt und angeordnet ist, dass der Dichtring (50, 50A) mit dem Aussenring (42) des Wälzlagers (40) zumindest entlang eines sich ringförmig um die Drehachse (R) erstreckenden Oberflächenbereichs des Aussenrings (42) in Kontakt ist.

6. Mahlvorrichtung (5) nach einem der Ansprüche 1-5, wobei der Dichtring (50, 50A) sich radial zur Drehachse (R) derart erstreckt, dass der Dichtring (50, 50A) einen sich ringförmig um die Drehachse (R) ersteckenden Abschnitt (51) aufweist, welcher mit dem Innenring (41) des Wälzlagers (40) oder sowohl mit dem Innenring (41) des Wälzlagers (40) als auch mit dem Mitnehmerrad (25) in Kontakt ist.

7. Mahlvorrichtung (5) nach Anspruch 6, wobei der Dichtring (50, 50A) mit dem Innenring (41) des Wälzlagers (40) zumindest entlang eines sich ringförmig um die Drehachse (R) erstreckenden Oberflächenbereichs des Innenrings (41) in Kontakt ist.

8. Mahlvorrichtung (5) nach einem der Ansprüche 1-5, wobei der Dichtring (50) umfasst: einen sich ringförmig um die Drehachse (R) erstreckenden Basis-Abschnitt (51), eine erste Dichtlippe (51A), welche mit dem Basis-Abschnitt (51) verbunden ist und sich vom Basis-Abschnitt (51) radial nach aussen erstreckt, und eine zweite Dichtlippe (51B), welche mit dem Basis-Abschnitt (51) verbunden ist und sich vom Basis-Abschnitt (51) radial nach aussen erstreckt,
wobei die erste Dichtlippe (51A) und die zweite Dichtlippe (51B) relativ zueinander derart angeordnet sind, dass die erste Dichtlippe (51A) an einem vom Basis-Abschnitt (51) entfernten Bereich axial zur Drehachse (R) einen Abstand (d) zur zweiten Dichtlippe (51B) aufweist.

9. Mahlvorrichtung (5) nach Anspruch 8, wobei die erste Dichtlippe (51A) derart angeordnet ist, dass sie mit dem Mitnehmerrad (25) in Kontakt ist, und
die zweite Dichtlippe (51B) derart angeordnet ist, dass sie mit dem Aussenring (42) des Wälzlagers (40) in Kontakt ist.

10. Mahlvorrichtung (5) nach Anspruch 9, wobei die erste Dichtlippe (51A) mit dem Mitnehmerrad (25) zumindest entlang eines sich ringförmig um die Drehachse (R) erstreckenden Oberflächenbereichs des Mitnehmerrads (25) in Kontakt ist, und/oder
die zweite Dichtlippe (51B) mit dem Aussenring (42) des Wälzlagers (40) zumindest entlang eines sich ringförmig um die Drehachse (R) erstrechenden Oberflächenbereichs des Aussenrings (42) in Kontakt ist.

11. Mahlvorrichtung (5) nach einem der Ansprüche 8-9, wobei zwischen der ersten erste Dichtlippe (51A) und der zweiten Dichtlippe (51B) ein freier Raum (52) ausgebildet ist, welcher radial nach innen vom Basis-Abschnitt (51) begrenzt ist und radial nach aussen zu dem für das Kaffeepulver vorbestimmten Raumbereich (7) offen ist.

12. Mahlvorrichtung (5) nach einem der Ansprüche 8 - 11, wobei der Basis-Abschnitt (51) derart angeordnet ist, dass er mit dem Mitnehmerrad (25) und/oder mit dem Innenring (41) des Wälzlagers (40) in Kontakt ist.

13. Mahlvorrichtung (5) nach einem der Ansprüche 1 - 12, wobei der Dichtring (50, 50A) ortsfest bezüglich des Mitnehmerrads (25) angeordnet ist.

14. Mahlvorrichtung (5) nach einem der Ansprüche 1 - 13, wobei der Dichtring (50, 50A) aus einem Kunststoff-Material gefertigt ist.

15. Mahlvorrichtung (5) nach einem der Ansprüche 1 - 14, mit einer Antriebseinrichtung (65) zum Erzeugen einer Drehbewegung des Innenrings (41) des Wälzlagers (40), des ersten Mahlelements (11) und/oder des Mitnehmerrads (25) um die Drehachse (R), wobei die Antriebseinrichtung (65) unterhalb des Mitnehmerrads (25) angeordnet ist.

## Claims

1. Grinding device (5) for grinding coffee beans, which comprises:
a first grinding element (11) and a second grinding element (15), wherein the first grinding element (11) is configured to be rotated relative to the second grinding element (15) around a rotary axis (R) in such a way that coffee beans are enabled to be ground between the first grinding element (11) and the second grinding element (15) into a coffee powder;
a carrier wheel (25), which is configured to be rotated around the rotary axis (R) together with the first grinding element (11) and is arranged in such a way that, during a rotation of the carrier wheel (25) around the rotary axis (R), the coffee powder on an edge region (T) of the carrier wheel (25) is enabled be conveyed through a spatial region (7) designated for the coffee powder to an outflow channel (6-4) for outputting the coffee powder out of the grinding device (5);
a housing (6), which surrounds the first grinding element (11), the second grinding element (15), the carrier wheel (25) and the spatial region (7) designated for the coffee powder and comprises the outflow channel (6-4), wherein the second grinding element (15) is arranged in a stationary manner relative to the housing (6);
a pivot bearing for mounting the first grinding element (11) and/or the carrier wheel (25) so that the first grinding element (11) and the carrier wheel (25) are configured to be rotated around the rotary axis (R) relative to the housing (6), wherein the pivot bearing comprises a rolling bearing (40), which comprises an inner ring (41) extending around the rotary axis (R), an outer ring (42) extending around the rotary axis (R) and a plurality of rolling elements (43) arranged between the inner ring (41) and the outer ring (42), wherein the outer ring is arranged in a stationary manner on the housing (6) spaced away from the carrier wheel (25) so that an intermediate region (47) extending in a ring-shaped manner around the rotary axis (R) is formed between the carrier wheel (25) and the outer ring (42), which intermediate region (47) extends above the outer ring (42) of the rolling bearing (40) axially to the rotary axis (R) between a bottom boundary surface (UF) and a top boundary surface (OF), wherein the bottom boundary surface (UF) of the intermediate region (47) is formed in a stationary manner with regard to the outer ring (42) and the top boundary surface (OF) of the intermediate region (47) is formed in a stationary manner with regard to the carrier wheel (25) and wherein the first grinding element (11) and the carrier wheel (25) are arranged in a stationary manner relative to the inner ring of the rolling bearing (40) and the inner ring (11) is supported on the outer ring (42) by means of the rolling elements (43) so that the first grinding element (11), the carrier wheel (25) and the inner ring (41) are configured to be rotated together around the rotary axis (R);
a seal element, which extends in a ring-shaped manner around the rotary axis (R) and is designed to prevent the coffee powder from advancing from the spatial region (7) designated for the coffee powder into a spatial region (8) under the carrier wheel (25);
**characterized in that**
the seal element is designed as an axial seal ring (50, 50A), which extends through the intermediate region (47) extending in a ring-shaped manner around the rotary axis (R) in such a way that the axial seal ring (50, 50A) abuts both the bottom boundary surface (UF) of the intermediate region (47) as well as the top boundary surface (OF) of the intermediate region (47).

2. Grinding device (5) according to claim 1, wherein
the rolling bearing (40) is designed as a radial bearing, which is configured to at least be radially stressed with regard to the rotary axis (R), or
the rolling bearing (40) is designed as a combined axial/radial bearing, which is configured to be both radially as well as axially stressed with regard to the rotary axis (R).

3. Grinding device (5) according to claim 1 or 2, wherein the rolling bearing (40) is designed as a deep groove ball bearing, cylindrical roller bearing, tapered roller bearing, radial roller bearing, spherical roller bearing or needle bearing.

4. Grinding device (5) according to one of the clams 1 - 3,
wherein
the seal ring (50, 50A) is in contact with the carrier wheel (25) and the outer ring (42) of the rolling bearing (40) .

5. Grinding device (5) according to one of the claims 1 - 4,
wherein
the seal ring (50, 50A) is shaped and arranged in such a way that the seal ring (50, 50A) is in contact with the outer ring (42) of the rolling bearing (40) at least along a surface region of the outer ring (42) extending in a ring-shaped manner around the rotary axis (R).

6. Grinding device (5) according to one of the claims 1 - 5,
wherein
the seal ring (50, 50A) extends radially to the rotary axis (R) in such a way that the seal ring (50, 50A) comprises a section (51) extending in a ring-shaped manner around the rotary axis (R), which is in contact with the inner ring (41) of the rolling bearing (40) or both with the inner ring (41) of the rolling bearing (40) as well as with the carrier wheel (25).

7. Grinding device (5) according to claim 6, wherein
the seal ring (50, 50A) is in contact with the inner ring (41) of the rolling bearing (40) at least along a surface region of the inner ring (41) extending in a ring-shaped manner around the rotary axis (R).

8. Grinding device (5) according to one of the claims 1 - 5,
wherein
the seal ring (50) comprises: a base section (51) extending in a ring-shaped manner around the rotary axis (R), a first sealing lip (51A), which is connected to the base section (51) and extends from the base section (51) radially toward the outside, and a second sealing lip (51B), which is connected to the base section (51) and extends from the base section (51) radially toward the outside, wherein the first sealing lip (51A) and the second sealing lip (51B) are arranged relative to one another in such a way that the first sealing lip (51A) has a spacing (d) to the second sealing lip (51B) axially to the rotary axis (R) on a region distanced away from the base section (51).

9. Grinding device (5) according to claim 8, wherein
the first sealing lip (51A) is arranged in such a way that it is in contact with the carrier wheel (25), and
the second sealing lip (51B) is arranged in such a way that it is in contact with the outer ring (42) of the rolling bearing (40).

10. Grinding device (5) according to claim 9, wherein
the first sealing lip (51A) is in contact with the carrier wheel (25) at least along a surface region of the carrier wheel (25) extending in a ring-shaped manner around the rotary axis (R), and/or
the second sealing lip (51B) is in contact with the outer ring (42) of the rolling bearing (40) at least along a surface region of the outer ring (42) extending in a ring-shaped manner around the rotary axis (R).

11. Grinding device (5) according to one of the claims 8 - 9,
wherein
a free space (52) is formed between the first sealing lip (51A) and the second sealing lip (51B), which is radially limited toward the inside from the base section (51) and is open radially toward the outside to the spatial region (7) designated for the coffee powder.

12. Grinding device (5) according to one of the claims 8- 11, wherein the base section (51) is arranged in such a way that it is in contact with the carrier wheel (25) and/or with the inner ring (41) of the rolling bearing (40).

13. Grinding device (5) according to one of the clams 1 - 12,
wherein
the seal ring (50, 50A) is arranged in a stationary manner with regard to the carrier wheel (25).

14. Grinding device (5) according to one of the clams 1 - 13,
wherein
the seal ring (50, 50A) is made out of a plastic material.

15. Grinding device (5) according to one of the clams 1 - 14, with a drive mechanism (65) for generating a rotational movement of the inner ring (41) of the rolling bearing (40), of the first grinding element (11) and/or of the carrier wheel (25) around the rotary axis (R), wherein the drive mechanism (65) is arranged under the carrier wheel (25).

## Revendications

1. Dispositif de broyage (5) pour moudre des grains de café, lequel comprend :
un premier élément de broyage (11) et un deuxième élément de broyage (15) sachant que le premier élément de broyage (11) peut tourner par rapport au deuxième élément de broyage (15) autour d'un axe de rotation (R) de telle manière que les grains de café peuvent être broyés en un café moulu entre le premier élément de broyage (11) et le deuxième élément de broyage (15),
une roue d'entraînement (25), laquelle peut tourner conjointement avec le premier élément de broyage (11) autour de l'axe de rotation (R) et est disposé de telle manière que lors d'une rotation de la roue d'entraînement (25) autour de l'axe de rotation (R), le café moulu peut être transporté sur une zone de bordure (T) de la roue d'entraînement (25) à travers une zone d'espace (7) prédéterminée pour le café moulu vers un conduit de sortie (6-4) pour délivrer le café moulu depuis le dispositif de broyage (5),
un boîtier (6), lequel entoure le premier élément de broyage (11), le deuxième élément de broyage (15), la roue d'entraînement (25) et la zone d'espace (7) prédéterminée pour le café moulu et comprend le conduit de sorti (6-4), sachant que le deuxième élément de broyage (15) est disposé fixement par rapport au boîtier (6),
un montage rotatif pour loger le premier élément de broyage (11) et/ou la roue d'entraînement (25) de telle manière que le premier élément de broyage (11) et la roue d'entraînement (25) peuvent tourner autour de l'axe de rotation (R) autour de l'axe de rotation (R) par rapport au boîtier (6), sachant le montage rotatif comprend un roulement à rouleaux (40), lequel comporte une bague intérieure (41) s'étendant autour de l'axe de rotation (R), une bague extérieure (42) s'étendant autour de l'axe de rotation (R) et plusieurs corps de roulement (43) disposés entre la bague intérieure (41) et la bague extérieure (42), sachant que la bague extérieure est disposés fixement sur le boîtier (6) à une distance de la roue d'entraînement (25) de telle manière qu'un espace intermédiaire (47) s'étendant en forme d'anneau autour de l'axe de rotation (R) entre la roue d'entraînement (25) et la bague extérieure (42) du roulement à rouleaux (40) est constitué, lequel s'étend au-dessus de la bague extérieure (42) axialement par rapport à l'axe de rotation (R) entre une surface de délimitation inférieure (UF) et une surface de délimitation supérieure (OF), sachant que la surface de délimitation inférieure (UF) de l'espace intermédiaire (47) est constitué fixement eu égard à la bague extérieure (42) et la surface de délimitation supérieure (OF) de l'espace intermédiaire (47) est constitué fixement eu égard à la roue d'entraînement (25) et sachant que le premier élément de broyage (11) et la roue d'entraînement (25) sont disposés fixement par rapport à la bague intérieure du roulement à rouleaux (40) et la bague intérieure (41) est soutenue sur la bague extérieure (42) au moyen des corps de roulement (43) de telle manière que le premier élément de broyage (11), la roue d'entraînement (25) et la bague intérieure (41) peuvent tourner conjointement autour de l'axe de rotation (R),
un élément d'étanchéité, lequel s'étend et est constitué en forme d'anneau autour de l'axe de rotation (R) pour éviter une progression du café moulu hors de la zone spatiale (7) prédéfinie pour le café moulu dans une zone spatiale (8) en dessous de la roue d'entraînement (25),
**caractérisé en ce que**
l'élément d'étanchéité est constitué en tant que bague d'étanchéité axiale (50, 50A), laquelle s'étend à travers l'espace intermédiaire (47) s'étendant en forme d'anneau autour de l'axe de rotation (R) de telle manière que la bague d'étanchéité axiale (50, 50A) vient adhérer tant à la surface de délimitation inférieure (UF) de l'espace intermédiaire (47) qu'à la surface de délimitation supérieure (OF) de l'espace intermédiaire (47) .

2. Dispositif de broyage (5) selon la revendication 1, sachant que le roulement à rouleaux (40) est constitué comme un palier radial, lequel peut être sollicité au moins radialement eu égard à l'axe de rotation (R) ou le roulement à rouleaux (40) est constitué comme palier axial/radial combiné, lequel peut être sollicité aussi bien radialement qu'axialement eu égard à l'axe de rotation (R).

3. Dispositif de broyage (5) selon la revendication 1 ou 2, sachant que le roulement à rouleaux (40) est constitué comme un roulement à billes rainuré, un roulement à rouleaux cylindriques, un roulement à rouleaux coniques, roulement sphérique à rouleaux, roulement à rotule ou roulement à aiguilles.

4. Dispositif de broyage (5) selon l'une quelconque des revendications 1 - 3, sachant que la bague d'étanchéité (50, 50A) est en contact au moins avec la roue d'entraînement (25) et la bague extérieure (42) du roulement à rouleaux (40).

5. Dispositif de broyage (5) selon l'une quelconque des revendications 1 - 4, sachant que la bague d'étanchéité (50, 50A) est formée et disposée de telle manière que la bague d'étanchéité (50, 50A) est en contact avec la bague extérieure (42) du roulement à rouleaux (40) au moins le long d'une zone de surface de la bague extérieure (42) s'étendant en forme d'anneau autour de l'axe de rotation (R) .

6. Dispositif de broyage (5) selon l'une quelconque des revendications 1 - 5, sachant que la bague d'étanchéité (50, 50A) s'étend radialement à l'axe de rotation (R) de telle manière que la bague d'étanchéité (50, 50A) comporte une section (51) s'étendant en forme d'anneau autour de l'axe de rotation (R), laquelle est en contact avec la bague intérieure (41) du roulement à rouleaux (40) ou tant avec la bague intérieure (41) du roulement à rouleaux (40) qu'avec la roue d'entraînement (25).

7. Dispositif de broyage (5) selon la revendication 6, sachant que la bague intérieure (50, 50A) est en contact avec la bague intérieure (41) du roulement à rouleaux (40) au moins le long d'une zone de surface de la bague intérieure (41) s'étendant en forme d'anneau autour de l'axe de rotation (R).

8. Dispositif de broyage (5) selon l'une quelconque des revendications 1 - 5, sachant que la bague d'étanchéité (50) comprend : une section de base (51) s'étendant en forme d'anneau autour de l'axe de rotation (R), une première lèvre d'étanchéité (51A), laquelle est reliée à la section de base (51) et s'étend radialement vers l'extérieur depuis la section de base (51) et une deuxième lèvre d'étanchéité (51B), laquelle est reliée à la section de base (51) et s'étend radialement vers l'extérieur depuis la section de base (51),
sachant que la première lèvre d'étanchéité (51A) et la deuxième lèvre d'étanchéité (51B) sont disposées l'une par rapport à l'autre de telle manière que la première lèvre d'étanchéité (51A) comporte axialement à l'axe de rotation (R), une distance (d) par rapport à la deuxième lèvre d'étanchéité (51B) sur une zone éloignée de la section de base (51).

9. Dispositif de broyage (5) selon la revendication 8, sachant que la première lèvre d'étanchéité (51A) est disposée de telle manière qu'elle est en contact avec la roue d'entraînement (25) et la deuxième lèvre d'étanchéité (51B) est disposée de telle manière qu'elle est en contact avec la bague extérieure (42) du roulement à rouleaux (40).

10. Dispositif de broyage (5) selon la revendication 9, sachant que la première lèvre d'étanchéité (51A) est en contact avec la roue d'entraînement (25) au moins le long d'une zone de surface de la roue d'entraînement (25), s'étendant en forme d'anneau autour de l'axe de rotation (R), et/ou
la deuxième lèvre d'étanchéité (51B) est en contact avec la bague extérieure (42) du roulement à rouleaux (40) au moins le long d'une zone de surface de la bague extérieure (42), s'étendant en forme d'anneau autour de l'axe de rotation (R).

11. Dispositif de broyage (5) selon l'une quelconque des revendications 8 - 9, sachant qu'entre la première lèvre d'étanchéité (51A) et la deuxième lèvre d'étanchéité (51B) est constitué un espace libre (52), lequel est limité radialement vers l'intérieur par la section de base (51) et est ouvert radialement vers l'extérieur par rapport à la zone spatiale (7) prédéfinie pour le café moulu.

12. Dispositif de broyage (5) selon l'une quelconque des revendications 8 - 11, sachant que la section de base (51) est disposée de telle manière qu'elle est en contact avec la roue d'entraînement (25) et/ou avec la bague intérieure (41) du roulement à rouleaux (40).

13. Dispositif de broyage (5) selon l'une quelconque des revendications 1 - 12, sachant que la bague d'étanchéité (50, 50A) est disposée fixement eu égard à la roue d'entraînement (25).

14. Dispositif de broyage (5) selon l'une quelconque des revendications 1 - 13, sachant que la bague d'étanchéité (50, 50A) est fabriquée dans un matériau à base de matière plastique.

15. Dispositif de broyage (5) selon l'une quelconque des revendications 1 - 14, avec un système d'entraînement (65) pour produire un mouvement de rotation de la bague intérieure (41) du roulement à rouleaux (40), du premier élément de broyage (11) et/ou de la roue d'entraînement (25) autour de l'axe de rotation (R), sachant que le système d'entraînement (65) est disposé en dessous de la roue d'entraînement (25).
